(19) Europäisches Patentamt
European Patent Office
Office européen des brevets

(11) **EP 3 196 555 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
*F24C 15/10* *(2006.01)*    *C03C 10/00* *(2006.01)*

(21) Anmeldenummer: **16199998.2**

(22) Anmeldetag: **22.11.2016**

(54) **KOCHMULDE MIT EINER GLASKERAMIK-KOCHFLÄCHE**

HOB WITH A GLASS CERAMIC COOKING PLATE

PLAQUE DE CUISSON COMPRENANT UNE SURFACE CHAUFFANTE EN VITROCÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2016 DE 102016101036**

(43) Veröffentlichungstag der Anmeldung:
**26.07.2017 Patentblatt 2017/30**

(73) Patentinhaber: **Schott AG**
**55122 Mainz (DE)**

(72) Erfinder:
• **DÖRK, Birgit**
**55128 Mainz (DE)**
• **BOCKMEYER, Matthias**
**55116 Mainz (DE)**
• **ZENKER, Thomas**
**55268 Nieder-Olm (DE)**
• **WEISS, Evelin**
**55131 Mainz (DE)**
• **OHL, Gerold**
**55286 Sulzheim (DE)**
• **TAPLAN, Martin**
**55120 Mainz (DE)**
• **DUDEK, Roland**
**55545 Bad Kreuznach (DE)**
• **BACKES, Sascha**
**55593 Rüdesheim (DE)**

(74) Vertreter: **Blumbach · Zinngrebe Patent- und Rechtsanwälte**
**PartG mbB**
**Alexandrastraße 5**
**65187 Wiesbaden (DE)**

(56) Entgegenhaltungen:
**EP-A1- 3 040 318      DE-A1-102009 013 127**
**DE-A1-102011 050 867**

## Beschreibung

Die Erfindung betrifft eine Kochmulde mit einer Glaskeramik-Kochfläche und zumindest einem unter der Glaskeramik-Kochfläche angeordneten Heizkörper.

Glaskeramiken auf Lithium-Aluminosilikat-Basis werden auf Grund ihrer geringen thermischen Ausdehnung für viele Anwendungen, bei denen hohe Temperaturen und Temperaturunterschiede auftreten, verwendet. So werden beispielsweise für Kochmulden Glaskeramik-Platten als Kochflächen verwendet. Die Energie zum Kochen wird von unter der Glaskeramik-Kochfläche angeordneten Heizkörpern bereitgestellt. Diese können beispielsweise als Halogen-, Strahlungs- oder Induktions-Heizkörper ausgelegt sein.

Die Herstellung geeigneter Glaskeramiken sowie die Anwendung im Kochfeldbereich ist in der Literatur beschrieben (z.B. "Low Thermal Expansion Glass Ceramics", Editor H. Bach, ISBN 3-540-58598-2). Ausgehend von einer durch einen Schmelz- und anschließenden Formgebungsprozess hergestellten Grünglasplatte erfolgt durch eine geeignete Temperaturbehandlung eine Keramisierung des Materials. Dabei bilden sich zunächst Keime, auf denen dann, gesteuert durch eine geeignete Temperatur-Zeit-Kurve, sogenannte Hochquarz-Mischkristalle (HQMK) aufwachsen. Diese weisen, im Gegensatz zu der umgebenden Glasmatrix, einen richtungsabhängigen und negativen thermischen Ausdehnungskoeffizienten auf. Bei geeignetem Verhältnis zwischen der kristallinen und der amorphen Phase stellt sich dadurch über einen weiten Temperatur-Einsatzbereich ein sehr niedriger Ausdehnungskoeffizient der Glaskeramik ein.

Solche Glaskeramik-Kochflächen sind zumeist im sichtbaren Bereich dunkel gefärbt, wobei sie keine oder nur eine geringe Lichtstreuung (Haze) aufweisen. Dunkel gefärbte Glaskeramik-Kochflächen werden verwendet, um die unter der Glaskeramik-Kochfläche angeordneten Heizelemente und die weiteren Bauteile der Kochmulde optisch zu verbergen. Die zumindest geringe Streuung ermöglicht es, Anzeigeelemente unter der Glaskeramik-Kochfläche anzuordnen und durch diese hindurch abzulesen.

Der niedrige thermische Ausdehnungskoeffizient sowie die hohen Einsatztemperaturen erschweren ein geeignetes Vorspannen der Glaskeramik-Kochflächen. Um dennoch die erforderliche Festigkeit, insbesondere die erforderliche Stoß- und Biegezugfestigkeit, zu erreichen, werden Glaskeramik-Kochflächen in dazu ausreichenden Materialstärken ausgebildet. Weiterhin ist es bekannt, auf der im Einsatz überwiegend auf Zug belasteten Unterseite der Glaskeramik-Kochfläche Noppen vorzusehen. Die Noppen trennen die Bereiche der höchsten Zugbelastung, welche in den Noppentälern liegen, von denen der stärksten Oberflächenverletzungen als potentiellen Bruchausgängen, welche sich strukturbedingt auf den Noppenbergen ausbilden. Dadurch kann die Festigkeit der Glaskeramik-Kochfläche deutlich erhöht werden. Für bekannte Glaskeramik-Kochflächen bedeutet dies zum Beispiel, dass mit einer genoppten Unterseite und einer Materialdicke von größer oder gleich 3,8 mm die Anforderungen an die Festigkeit der Glaskeramik-Kochflächen erfüllt werden. Dabei sind die Anforderung durch Normen, wie beispielsweise die EN 60335, die UL 858 oder die CSA 22.2, vorgegeben.

Zur Bedienung von Kochmulden ist es bekannt, durch die Glaskeramik-Kochfläche hindurch wirkende Berührungssensoren in der Kochmulde und unter der Glaskeramik-Kochfläche anzuordnen. Es werden sowohl optisch wirkende Berührungssensoren, welche im Infrarotbereich arbeiten, als auch kapazitive Berührungssensoren eingesetzt. Durch Auflegen eines Fingers in den Messbereich eines Berührungssensors auf der Oberseite der Glaskeramik-Kochfläche wird ein Schaltvorgang ausgelöst. Dadurch kann beispielsweise die Leistungseinstellung eines Heizkörpers vorgenommen werden.

Aus der DE 10 2006 059 850 A1 ist ein optischer Sensor mit einem elektromagnetische Strahlung aussendenden Sender und einer die Strahlung empfangenden Empfänger bekannt. Der optische Sensor dient als berührungsempfindlicher Tastschalter eine Bedienungseinrichtung eines elektronischen Haushaltsgerätes, beispielsweise eines Glaskeramik-Kochfeldes. Er ist in dieser Anwendung unter einer als Abdeckung dienenden Glaskeramik-Kochfläche angeordnet, sodass die von dem Sender emittierte Strahlung durch die Glaskeramik-Kochfläche dringt. Durch einen auf die Kochfläche und in den Strahlengang gelegten Finger wird ein Teil der Strahlung durch die Glaskeramik zurück zu dem Empfänger reflektiert und dadurch ein Schaltvorgang ausgelöst. Nachteilig wird bei dem zweimaligen Durchtritt der elektromagnetischen Strahlung durch die vergleichsweise dicke Glaskeramik-Kochfläche ein großer Anteil der Strahlung absorbiert. Dies führt zu Einbußen in der Empfindlichkeit und in dem Signal-/Rauschverhältnis des optischen Sensors. Ebenfalls nachteilig wirken sich auf der Unterseite der Glaskeramik-Kochfläche eingeformte Noppen auf die gerichtete Ausbreitung der elektromagnetischen Strahlung aus.

Die Eigenfarbe und die im sichtbaren Spektralbereich geringe Transmission der Glaskeramik-Kochfläche wirken sich auf die gewünschte Erkennbarkeit und Farbwirkung von Signallampen und Anzeigen, welche für bestimmte Anwendungen unterhalb der Glaskeramik-Kochfläche vorgesehen sind, nachteilig aus. Ebenfalls nachteilig wirken die Noppen verzerrend auf die Darstellung von unter der Glaskeramik-Kochfläche angeordneten Anzeigen. Der Effekt wird dadurch weiter verstärkt, dass die Anzeigen häufig beabstandet zu der Glaskeramik-Kochfläche angeordnet sind. Dies kann erforderlich sein, um beispielsweise eine Überhitzung der elektronischen Komponente durch Rückerwärmung durch einen aufgestellten, heißen Topf zu vermeiden.

Aus der DE 10 2011 050 867 A1 ist eine im Bereich des sichtbaren Lichtes dunkel eingefärbte Glaskeramik-Kochfläche bekannt. Das verwendete Glaskeramikmaterial weist als vorherrschende Kristallphase Hochquarz-Mischkristalle (HQMK)auf. Die Glaskeramik-Kochfläche zeichnet sich durch eine Ebene, nicht strukturiert und planparallel zur Oberseite ausgerichtete Unterseite aus. Dadurch können Anzeigen mit einer gegenüber einer genoppten Kochfläche deutlich verbesserten Anzeigeschärfe verwirklicht werden. Beschichtungen der Unterseite können konturscharf aufgebracht werden. Somit können Elektroden von berührungsempfindlichen Sensoren (Touch-Sensoren) sowie von Topf- und Topfgrößensensoren konturscharf dargestellt werden. Die Glaskeramik-Kochfläche kann mit dem verwendeten Glaskeramikmaterial in Dicken zwischen 2 und 6 mm vorgesehen sein und dabei eine ausreichende mechanische Stabilität aufweisen. Nicht beschrieben ist, durch welche Maßnahmen die Glaskeramik bei glatter Unterseite und bei Dicken kleine 4 mm eine mit Bezug auf die genannten Normen ausreichende Festigkeit erreicht.

Der Erfindung liegt die Aufgabe zu Grunde, eine Kochmulde mit einer volumengefärbten und im sichtbaren Wellenlängenbereich nicht oder nur wenig streuenden Glaskeramik-Kochfläche zu schaffen, welche eine hohe Funktionssicherheit von unter der Glaskeramik-Kochfläche angeordneten Berührungssensoren ermöglicht und gleichzeitig eine zur Einhaltung der Normvorgaben ausreichende mechanische Festigkeit aufweist.

Die Aufgabe der Erfindung wird gelöst, mit einer Kochmulde mit einer Glaskeramik-Kochfläche und zumindest einem unter der Glaskeramik-Kochfläche angeordneten Heizkörper, wobei ein durch die Glaskeramik-Kochfläche hindurch ansteuerbarer Berührungssensor zur Leistungseinstellung des zumindest einen Heizkörpers mittelbar oder unmittelbar mit der Glaskeramik-Kochfläche verbunden oder an diese angedrückt oder beabstandet zu dieser angeordnet ist, wobei die Glaskeramik-Kochfläche als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $AS_2O_3$ | 0 - 1,5 |
| $TiO_2 + ZrO_2 + SnO_2$ | 3,8 - 6 |

(fortgesetzt)

| | |
|---|---|
| $V_2O_5$ | 0,01 - 0,08 |
| $Fe_2O_3$ | 0,03 - 0,3 |

und gegebenenfalls weitere Farboxide, in Summe bis maximal 1,0 Gewichtsprozent, wobei die Glaskeramik-Kochfläche einen Kern und im Kern Keatitmischkristall (KMK) als vorherrschende Kristallphase aufweist, wobei der KMK-Kristallphasenanteil in einer Tiefe von $10\,\mu m$ oder mehr 50% der Summe von HQMK- und KMK-Kristallphasenanteilen übersteigt und wobei die Glaskeramik-Platte eine Dicke in einem Bereich zwischen 2,8mm und 3,5mm, bevorzugt zwischen 2,8mm und 3,2mm, aufweist.

Bei einer bevorzugten Ausführungsform der Kochmulde weist die Glaskeramik-Kochfläche an ihrer Oberfläche oder zu ihrer Oberfläche hin gerichtet eine Gradientenschicht und den Kern darunter liegend auf, wobei die Glaskeramik-Kochfläche im Kern Keatitmischkristall (KMK) als vorherrschende Kristallphase und in der Gradientenschicht Hochquarzmischkristall (HQMK) als vorherrschende Kristallphase aufweist.

In vorteilhafter Weise beträgt der maximale Haze bei einer Wellenlänge von 630nm höchstens 6%, vorzugsweise höchstens 5%, besonders bevorzugt höchstens 4%

Vorzugsweise kann es dabei vorgesehen sein, dass der $Li_2O$-Gehalt zwischen 3,0 und 4,2 Gewichtsprozent beträgt. Ebenso kann vorzugsweise der $TiO_2$-Gehalt auf einen Bereich von 2,3 bis 4,0 Gewichtsprozent begrenzt sein. Der $Fe_2O_3$-Gehalt beträgt besonders bevorzugt 0,03 bis 0,2 Gewichtsprozent.

Eine solche Glaskeramik-Kochfläche zeigt eine dunkle Einfärbung im sichtbaren Wellenlängenbereich bei gleichzeitig geringer Streuung (Haze).

Wie sich überraschend gezeigt hat, weist die Glaskeramik-Kochfläche in der genannten Zusammensetzung und dem beschriebenen Schichtaufbau eine gegenüber bekannten LAS-Glaskeramik-Kochflächen erhöhte Festigkeit auf. Daher kann die Dicke der Glaskeramik-Kochfläche, die üblicherweise bei 4mm liegt, reduziert werden, wobei weiterhin die relevanten Normvorgaben (EN 60335, UL 858 oder CSA 22.2) zur erforderlichen Stoßfestigkeit von Glaskeramik-Kochflächen eingehalten werden. Durch die reduzierte Dicke der Glaskeramik-Kochfläche auf zum Beispiel 3,2mm wird die Empfindlichkeit und der Signal-/Rauschabstand und damit die Schaltsicherheit von unter der Glaskeramik-Kochfläche angeordneten und durch diese wirkenden Berührungssensoren deutlich verbessert. Es wird so eine Kochmulde geschaffen, welche die Normanforderungen an die Festigkeit der Glaskeramik-Kochfläche erfüllt und gleichzeitig eine verbesserte und zuverlässigere Bedienung mittels unter der Glaskeramik-Kochfläche angeordneten Berührungsschaltern ermöglicht, als dies für heute bekannte Kochmulden bekannt ist.

Zur Herstellung einer dazu geeigneten Glaskeramik-Kochfläche wird zunächst ein Grünglas in der oben genannten Zusammensetzung geschmolzen, in die gewünschte Plattenform verformt und entsprechend zugeschnitten. Während eines nachfolgenden Keramisierungsprozesses wird ein vorkristallisiertes glaskeramisches Zwischenerzeugnis mit Hochquarzmischkristall (HQMK) als vorherrschender Kristallphase hergestellt. Durch einen weiteren Kristallumwandlungsschritt wird die HQMK-Phase teilweise in eine Keatitmischkristallphase umgewandelt. Dieser Umwandlungsschritt erfolgt bei einer Maximaltemperatur $T_{max}$, die über eine vorgegebene Haltezeit $t(T_{max})$ gehalten wird. Geeignete Haltezeiten und Maximaltemperaturen sind durch einen Temperatur-Zeit-Bereich vorgegeben, der von vier Geraden begrenzt wird. Die Geraden verbinden dabei Eckpunkte des Temperatur-Zeit-Bereichs mit den Wertepaaren ($T_{max}$ = 910°C; $t(T_{max})$ = 25 Minuten), ($T_{max}$ = 960°C; $t(T_{max})$ = 1 Minute), ($T_{max}$ = 980°C; $t(T_{max})$ = 1 Minute) und ($T_{max}$ = 965°C; $t(T_{max})$ = 25 Minuten).

Vorteilhaft kann der zumindest eine Berührungssensor als kapazitiver Sensor oder als optischer Sensor, insbesondere als Infrarot-Sensor, ausgebildet sein. Ein kapazitiv arbeitender Berührungssensor weist zumindest eine Elektrode auf, an der oder zwischen denen ein zeitlich wechselndes elektrisches Feld aufgebaut ist. Das elektrische Feld wirkt dabei durch die Glaskeramik-Kochfläche hindurch. Ein in das elektrische Wechselfeld eingebrachter Finger verändert die Kapazität des durch die Elektroden aufgebauten Kondensators, was durch ein geändertes Spannungs- oder Stromsignal einen Schaltvorgang auslöst. Die Empfindlichkeit eines unter einer Glaskeramik-Kochfläche angeordneten, kapazitiven Berührungsschalters ändert sich beispielsweise zwischen einer Elektrode und einem Finger (zweite Elektrode) nach der Kondensatorformel $C=\varepsilon_0\varepsilon_r{}^*A/d$ bei einer Änderung der Glaskeramik-Dicke d gemäß dem Verhältnis der Dickenänderung. Dabei bedeuten C die Kapazität des Kondensators, $\varepsilon_0$ die elektrische Feldkonstante, $\varepsilon_r$ die Dielektrizitätszahl und A die Sensorfläche. Bei einer Änderung der Dicke der Glaskeramik-Kochfläche von 4mm auf 3mm ändert sich demnach die Empfindlichkeit des kapazitiven Berührungsschalters um 25%. Dieser Gewinn kann für ein empfindlicheres Schaltverhalten des Berührungsschalters verwendet werden. Es können jedoch auch funktionale Zusatzschichten zwischen den kapazitiven Berührungssensor und der Glaskeramik-Kochfläche vorgesehen werden, ohne dass sich die Empfindlichkeit des Berührungssensors gegenüber dem Einsatz unter einer dickeren Glaskeramik-Kochfläche verschlechtert. Ebenfalls möglich ist es, die Sensorfläche A entsprechend der erfolgten Dickenänderung der Glaskeramik-Kochfläche zu verringert, ohne die Empfindlichkeit gegenüber einem unter einer dickeren Glaskeramik-Kochfläche angeordneten kapazitiven Berührungssensor zu verschlechtern. Bei kleineren Sensorflächen A können feinere Sensorstrukturen dargestellt werden.

Bei einem optischen Berührungssensor (Infrarot-Sensor) wird bei einem festen Öffnungswinkel der Sendediode für die Infrarotstrahlung bei einer Glaskeramik-Kochfläche mit einer reduzierten Dicke eine kleinere Fläche mit höherer Flächenintensität ausgeleuchtet als bei einer Glaskeramik-Kochfläche mit einer größeren Dicke. Die räumliche Auflösung zwischen benachbarten optischen Berührungssensoren kann so verbessert werden.

Gemäß einer Ausführungsform der Erfindung kann es vorgesehen sein, dass zumindest ein Leuchtelement und/oder zumindest eine selbst leuchtende oder fremd beleuchtete Anzeige mittelbar oder unmittelbar anliegend an der Unterseite der Glaskeramik-Kochfläche oder beabstandet zu der Unterseite der Glaskeramik-Kochfläche angeordnet ist und dass das Leuchtelement und/oder die Anzeige die Glaskeramik-Kochfläche durchleuchtet. Die Leuchtelemente bzw. Anzeigen können beispielsweise dazu ausgelegt sein, eine über die Berührungsschalter eingestellte Leistungsstufe anzuzeigen.

Bei einer auf der Oberseite der Glaskeramik-Kochfläche angeordneten Maskierung des Displaybereichs, unter dem das Leuchtelement oder die Anzeige angeordnet sind, führt die verringerte Dicke der Glaskeramik-Kochfläche zu einem verringerten Versatz zwischen der Maskierung und der Anzeige bzw. dem Leuchtelement. Das Leuchtelement bzw. die Anzeige können so genauer der Maskierung zugeordnet werden. Gleichzeitig vergrößert sich bei einer verringerten Dicke der Glaskeramik-Kochfläche der Winkel, in dem eine Anzeige bzw. ein Leuchtelement durch den freigestellten Bereich der Maskierung zu sehen ist. Bei gleicher Farbstoffkonzentration vergrößert sich bei einer reduzierten Dicke der Glaskeramik-Kochfläche weiterhin der Betrachtungswinkel, unter dem eine Anzeige bzw. ein Leuchtelement mit ausreichender Helligkeit zu erkennen ist. Der Betrachtungswinkel ist für diese Betrachtung definiert als der Winkel, unter dem noch 50% der Lichtintensität im Vergleich zur Senkrechten und bei Annahme einer isotropen Abstrahlcharakteristik des Leuchtelements bzw. der Anzeige vorliegt.

Ebenfalls führt die Reduzierung der Dicke der Glaskeramik-Kochfläche zu einer Verringerung der Verfärbung einer Anzeige bzw. eines Leuchtelements (insbesondere bei spektral breitbandigen Leuchtelementen bzw. Anzeigen, insbesondere bei weißem Licht), wenn von einer gleichen Farbstoffkonzentration der Glaskeramik-Kochfläche ausgegangen wird. Dabei gilt im Rahmen der Erfindung als Maß für die Verfärbung das Verhältnis der Transmission der Glaskeramik-Kochfläche für zwei Wellenlängen bei den jeweiligen Dicken. Durch die reduzierte Verfärbung kann ein verbesserter Weißabgleich für weiße Anzeigen und Leuchtelemente erfolgen. Ursprünglich weiße Anzeigen bzw. Leuchtelemente erscheinen bei einer 3,0mm dicken Glaskeramik-Kochfläche weniger verfärbt als bei einer 4mm starken Glaskeramik-Kochfläche. Auch bei einer schrägen Betrachtung der Anzeige bzw. Leuchtelement erfolgt bei einer dünneren Glaskeramik-Kochfläche eine geringere Verfärbung. Warnmeldung, die vorzugsweise durch Leuchthinweise in unterschiedlichen Signalfarben ausgegeben werden, können so besser und fehlerfrei erkannt werden.

Eine verzeichnungsfreie Abbildung von unter der Glaskeramik-Kochfläche angeordneten Anzeigen und Leuchtelementen kann dadurch erreicht werden, dass die Unterseite der Glaskeramik-Kochfläche nicht strukturiert ausgeführt ist. Auf Grund der erhöhten Festigkeit des für die Herstellung der Glaskeramik-Kochfläche verwendeten Glaskeramikmaterials kann auf die sonst üblichen Noppung der Unterseite der Glaskeramik-Kochfläche verzichtet werden, wobei die Anforderungen bezüglich der Festigkeit der Glaskeramik-Kochfläche weiter eingehalten werden. Ohne Noppen und durch die geringe Streuung der Glaskeramik-Kochfläche im sichtbaren Wellenlängenbereich werden Anzeigen und Leuchtelemente durch die Glaskeramik-Kochfläche hindurch konturgenau dargestellt. Die Größe dargestellter Symbole, beispielsweise von Ziffern oder Buchstaben, kann daher bei Bedarf reduziert werden. Weiterhin kann die Auflösung der dargestellten Symbole erhöht werden.

Auch für die Verwendung von unter der Glaskeramik-Kochfläche angeordneten Berührungssensoren weist eine nicht strukturierte, glatte Unterseite der Glaskeramik-Kochfläche Vorteile auf. Bei einem Infrarot-Sensor als Berührungssensor wird das ausgesendete und das von einem Finger zurückreflektierte Licht nicht mehr an den Noppen entsprechend vieler kleiner Linsen unregelmäßig gebrochen. Dadurch gelangt mehr Licht in die zugeordnete Berührungszone auf der Glaskeramik-Oberseite und wieder zurück zu dem Empfänger des Infrarot-Sensors. Dadurch wird die Empfindlichkeit optischer Berührungssensoren verbessert. Zudem werden durch die Noppen lokal Intensitätsschwankungen hervorgerufen, die die Einstellung eines Signalschwellwertes zur Berührungserkennung erschweren. Dies entfällt bei einer glatten Unterseite. Der Signalschwellwert kann mit weniger Toleranz und damit auch empfindlicher eingestellt werden.

Bei kapazitiv arbeitenden Berührungssensoren kann sich kein Schmutz bzw. keine Feuchtigkeit in den Noppentälern zwischen den Elektroden der Berührungssensoren und der Glaskeramik-Kochfläche festsetzen, wodurch Störeinflüsse auf die empfindliche kapazitive Messung vermieden werden können.

Die Eigenschaften von Berührungssensoren, Leuchtelementen und Anzeigen können dadurch an die jeweiligen Anforderungen angepasst werden, dass zwischen dem Berührungssensor und/oder dem Leuchtelement und/oder der zumindest einen Anzeige auf der einen Seite und der Glaskeramik-Kochfläche auf der anderen Seite eine transparente und/oder eine farbig transparente und/oder eine nicht transparente und/oder eine lichtstreuende Zwischenschicht angeordnet ist. Eine klare transparente Zwischenschicht kann beispielsweise auf eine genoppte Unterseite einer Glaskeramik-Kochfläche aufgebracht werden und gegenüberliegend zu der Glaskeramik eine ebene Fläche ausbilden. Ist der Brechungsindex der Zwischenschicht vorzugsweise an den der Glaskeramik-Kochfläche angepasst, so bildet die Zwischenschicht eine Immersionsschicht, welche die Lichtbrechung beim Übergang von Licht von der Immersionsschicht zu der Glaskeramik-Kochfläche zumindest verringert. Anzeigen und Leuchtelemente können so auch bei genoppt ausgeführten Glaskeramik-Kochfläche verzeichnungsfrei oder beispielsweise bei nicht vollständig angepasstem Brechungsindex der Immersionsschicht mit nur einer geringen Verzeichnung wahrgenommen werden. Ist die Immersionsschicht auch im Infrarotbereich wirksam, so können auch unerwünschte Brechungen der Infrarot-Strahlung eines optischen Berührungssensors an den Noppen verhindert und dadurch Störeinflüsse auf die Funktion des optischen Berührungssensors vermieden werden. Die Elektroden kapazitiver Berührungssensoren können an die Immersionsschicht angedrückt oder mit dieser stoffschlüssig verbunden sein. Dadurch kann vermieden werden, dass sich Feuchtigkeit oder Schmutz zwischen den Elektroden und der Unterseite der Glaskeramik-Kochfläche ansammelt und die Funktion des kapazitiven Berührungssensors beeinträchtigt.

Eine transparent eingefärbte Zwischenschicht ermöglicht eine subtraktive Farbmischung, sodass das von einer Anzeige oder einem Leuchtelement ausgesendetes Licht nach Durchgang durch die Zwischenschicht und die Glaskeramik-Kochfläche eine gewünschte Farbe aufweist. Dadurch wird eine Farbkompensation der Eigenfarbe der Glaskeramik-Kochfläche ermöglicht. Mit einer nicht transparenten Zwischenschicht kann beispielsweise eine Maskierung eines Leuchtelementes erfolgen, um ein Symbol darzustellen. Mit einer nicht transparenten bzw. stark streuenden Zwischenschicht kann auch eine Einsicht in die Kochmulde im Bereich kapazitiver Berührungssensoren vermieden werden.

Die Zwischenschicht kann beispielsweise als direkt auf die Unterseite der Glaskeramik-Kochfläche aufgebrachte Schicht oder als Folie ausgeführt sein.

Entsprechend einer bevorzugten Ausführungsvariante der Erfindung kann es vorgesehen sein, dass die Glaskeramik-Kochfläche auf ihrer Unterseite zumindest bereichsweise mit einer im sichtbaren Spektralbereich nicht transparenten Streulichtabdeckung versehen ist. Eine solche nicht transparente Streulichtabdeckung kann vorzugsweise außerhalb der Heißbereiche und außerhalb von Anzeige- und Displaybereichen angeordnet sein. Sie verhindert auch bei starkem Auflicht einen nicht erwünschten Einblick in die Kochmulde. Dies gilt insbesondere auch für eine in ihrer Dicke reduzierte Glaskeramik-Kochfläche, die bei gleicher Volumeneinfärbung eine erhöhte Transparenz im sichtbaren Bereich aufweist. In der Streulichtabdeckung können nicht beschichtete Bereiche, beispielsweise in Form von Symbolen, ausgespart sein. Die Symbole können dann durch eine entsprechende Hinterleuchtung von der Oberseite der Glaskeramik-Kochfläche aus erkannt werden. Ist die Unterseite der Glaskeramik-Kochfläche glatt ausgeführt, so kann die Streulichtabdeckung, beispielsweise durch einen Siebprozess, konturgenau auf die Glaskeramik-Unterseite aufgebracht werden. Symbole können so mit einer hohen Auflösung dargestellt werden. Anzeige- und Heißbereiche können ebenfalls mit einer scharf verlaufenden Grenzlinie ausgespart werden.

Gemäß einer weiterführenden Ausgestaltung der Erfindung kann es vorgesehen sein, dass Sensor-Flächenelemente und/oder Sensor-Leiterbahnen und/oder Sensor-Kontaktstellen mittelbar oder unmittelbar auf die Glaskeramik-Kochfläche aufgebracht sind und/oder dass Sensor-Elektroden mittelbar oder unmittelbar auf die Glaskeramik-Kochfläche aufgebracht oder an diese angedrückt sind. Die Sensor-Flächenelemente oder Sensor-Leiterbahnen können beispielsweise durch eine partielle elektrisch leitfähige Beschichtung der Glaskeramik Unterseite gebildet sein. Dazu können opake oder transparente elektrisch leitfähige Materialien verwendet werden. Die Sensor-Elektroden können beispielsweise als Metallteile von unten an die Glaskeramik-Kochfläche angedrückt werden. In Verbindung mit geeigneten Auswerteelektroniken können mit solchen Sensorstrukturen verschiedene Funktionen realisiert werden. Beispielsweise kann eine induktive oder kapazitive Topferkennung oder Topfgrößenerkennung durchgeführt werden. Ebenso möglich ist es, die Temperatur der Glaskeramik-Kochfläche im Heißbereich zu bestimmen. Dazu kann beispielsweise eine Widerstandsänderung einer Sensor-Leiterbahn oder eines zwischen zwei Sensor-Leiterbahnen angeordneten Glaskeramik-Abschnittes gemessen und entsprechend ausgewertet werden. Anhand der Temperaturmessung können verschiedene Steuerungsfunktionen der Kochmulde realisiert werden. Beispielsweise kann ein Überhitzen der Glaskeramik-Kochfläche vermieden werden. Weiterhin kann, beispielsweise in Abhängigkeit von einer vorliegenden Qualität eines aufgestellten Kochgeschirrs, eine Leistungsumverteilung zwischen den Heizkreisen eines Mehrkreis-Heizkörpers vorgenommen werden. Denkbar ist auch eine automatisierte Regelung eines Kochvorgangs auf Basis der erfassten Glaskeramik-Temperaturen. Die Sensorstrukturen können weiterhin als Elektroden von kapazitiven Berührungssensoren verwendet werden. Mit Hilfe von transparenten Elektroden können kapazitiv arbeitende Berührungssensoren zwischen einer Anzeige oder einem Leuchtelement und der Glaskeramik-Kochfläche angeordnet werden. Dies ermöglicht beispielsweise eine intuitive Benutzerführung der Kochmulde, bei der Schaltvorgänge an Berührungssensoren in Abhängigkeit von dem jeweiligen Inhalt der hinterlegten Anzeige unterschiedliche Ereignisse auslösen. Auf Grund der verringerten Dicke der Glaskeramik-Kochfläche weisen die beschriebenen Sensoren eine verbesserte Empfindlichkeit auf. Auf Basis der erhaltenen Sensorsignale durchgeführte Steuer-, Schalt- und Regelungsvorgänge können so mit einer größeren Genauigkeit und Funktionssicherheit durchgeführt werden. Vorteilhaft wirkt es sich auch aus, wenn die Glaskeramik-Unterseite nicht strukturiert, sondern glatt ausgeführt ist. Die Sensor-Flächenelemente, Sensor-Leiterbahnen und Sensor-Elektroden können so mit einer besseren Konturgenauigkeit und einer gleichmäßigeren Dicke auf die Unterseite der Glaskeramik-Kochfläche aufgebracht werden. Für die erwünschten Funktionen durchzuführende kapazitive, induktive oder ohmsche Messungen können so mit einer deutlich verbesserten Genauigkeit erfolgen. Bei angedrückten Sensor-Elektroden ergibt sich im Gegensatz zu einer strukturierten Glaskeramik-Unterseite kein sich verändernder Spalt zwischen den Sensor-Elektroden und der Glaskeramik. Dadurch kann beispielsweise vermieden werden, dass Schmutz oder Feuchtigkeit zwischen die Elektroden und die Glaskeramik-Kochfläche gelangt und das Messergebnis verfälscht.

Um Anzeigen und Leuchtelemente klar darstellen zu können kann es vorgesehen sein, dass, jeweils normiert auf eine 4mm dicke Glaskeramik-Kochfläche, der maximale "Haze" bei einer Wellenlänge von 470nm höchstens 15%, vorzugsweise höchstens 12% beträgt und/oder dass der maximale Haze in einem Wellenlängenbereich von 400nm bis 500nm höchstens 20%, vorzugsweise höchstens 17%, beträgt und/oder dass der maximale Haze bei einer Wellenlänge von 630nm höchstens 6%, vorzugsweise höchstens 5%, besonders bevorzugt höchstens 4% beträgt. Der Streulichtanteil ist dabei nach dem internationalen Standard ISO 14782: 1999(E), gemessen. Die Glaskeramik-Kochfläche der erfindungsgemäßen Kochmulde unterscheidet sich damit insbesondere von bekannten Glaskeramik-Kochflächen mit einem hohen Keatitmischkristall-Anteil, welche auf Grund einer großen Anzahl an Streuzentren transluzent bis opak erscheinen und damit für einen Einsatz in Verbindung mit Anzeigen nicht geeignet sind.

Um die störende Sicht auf in der Kochmulde unter der Glaskeramik-Kochfläche angeordnete Bauelemente zu verhindern und um eine Blendwirkung durch strahlende Heizkörper, insbesondere helle Halogen-Heizkörper, zu vermeiden kann es vorgesehen sein, dass, jeweils normiert auf eine 4mm dicke Glaskeramik-Kochfläche, der Lichttransmissionsgrad im Wellenlängenbereich von 380nm bis 780nm kleiner oder gleich 5%, bevorzugt 10 % ist.

Vorteilhaft ist die spektrale Transmission bei einer Wellenlänge von 420nm größer als 0,2%

Bei einem wie vorstehend beschrieben eingestellten Lichttransmissionsgrad wirkt die Glaskeramik-Kochfläche in Aufsicht schwarz. Unter der Glaskeramik-Kochfläche angeordnete Anzeigen und Leuchtelemente können jedoch gut durch die Glaskeramik hindurch erkannt und abgelesen werden. Auch können betriebene Heizkörper in ausreichender Helligkeit wahrgenommen werden.

Eine verbesserte Anzeigefähigkeit von Anzeigen und Leuchtelementen kann dadurch erreicht werden, dass die Glaskeramik-Kochfläche färbende Metallionen enthält, wobei die Transmission der Glaskeramik-Kochfläche in einem Anzeigebereich durch eine mittels elektromagnetischer Strahlung induzierte lokale Aufheizung bereichsweise gegenüber einem benachbarten Bereich erhöht ist. In solchen Anzeigebereichen mit erhöhter Transmission können zugeordnete Anzeigen und Leuchtelemente besser erkannt und abgelesen werden. Weiterhin ist die Verschiebung des Farbortes der Anzeige bzw. des Leuchtelements innerhalb eines solchen Anzeigebereichs reduziert.

Eine gute Ablesbarkeit einer unter der Glaskeramik-Kochfläche und dem Anzeigebereich angeordneten Anzeige sowie eine gute Wahrnehmbarkeit eines ebenfalls dort angeordneten Leuchtelements kann dadurch erreicht werden, dass in einem Wellenlängenbereich von 380nm bis 780nm und in dem Anzeigebereich der Lichttransmissionsgrad der Glaskeramik-Kochfläche kleiner oder gleich 2,5% ist oder dass der Lichttransmissionsgrad zwischen 2,5% und 5% liegt oder dass der Lichttransmissionsgrad kleiner oder gleich 10% ist. Bei einem Lichttransmissionsgrad kleiner oder gleich 2,5% kann auch innerhalb des Anzeigebereichs eine Einsicht in die Kochmulde bei nicht leuchtender Anzeige oder Leuchteinheit sicher vermieden werden. Bei einer Transmission zwischen 2,5% und 5% ist ein guter Kompromiss zwischen einer reduzierten Einsicht in die Kochmulde bei ausgeschalteter Anzeige bzw. Leuchtelement und einer guten und hellen Darstellung der eingeschalteten Anzeige bzw. des eingeschalteten Leuchtelements erreicht. Bei einem Lichttransmissionsgrad kleiner oder gleich 10% können auch lichtschwache und damit kostengünstige Anzeigen oder Leuchtelemente verwendet und sicher erkannt werden.

Vorteilhaft sind die Anzeige oder das Leuchtelement innerhalb eines Anzeigebereichs der Glaskeramik-Kochfläche mit einem vergrößerten Lichttransmissionsgrad gegenüber dem umgebenden Glaskeramik-Material angeordnet. Damit ist zum einen die gute Ablesbarkeit der Anzeige bzw. die Erkennbarkeit des Leuchtelements gewährleistet und zum anderen der Einblick in die Kochmulde in dem den Anzeigebereich umgebenden Glaskeramik-Material verhindert.

Die Erfindung wird nachfolgend anhand von Ausführungsbeispielen und der beigeschlossenen Figuren näher erläutert. Dabei verweisen in den Figuren gleiche Bezugszeichen auf gleiche oder entsprechende Elemente.

Es zeigen:

Fig. 1 in einer schematischen Darstellung einen Ausschnitt einer Kochmulde mit einer Glaskeramik-Kochfläche, einem Heizkörper und einer Elektronikanordnung,

Fig. 2 in einer schematischen Darstellung einen Ausschnitt einer Glaskeramik-Kochfläche mit einem optischen Berührungssensor,

Fig. 3 in einer schematischen Darstellung einen Ausschnitt einer Glaskeramik-Kochfläche mit einem kapazitiven Berührungssensor,

Fig. 4 in einer schematischen Darstellung einen Ausschnitt einer Glaskeramik-Kochfläche mit einem Leuchtelement und einer Oberseitenbeschichtung,

Fig. 5 in einer schematischen Darstellung einen Ausschnitt einer Glaskeramik-Kochfläche mit einem Leuchtelement,

Fig. 6a in einer schematischen seitlichen Darstellung einen Ausschnitt einer Glaskeramik-Kochfläche mit einer genoppten Unterseite und einer Anzeige,

Fig. 6b den in Fig. 6a gezeigten Ausschnitt einer Glaskeramik-Kochfläche in einer Draufsicht,

Fig. 7a in einer schematischen seitlichen Darstellung einen Ausschnitt einer Glaskeramik-Kochfläche mit einer glatten Unterseite und einer Anzeige,

Fig. 7b den in Fig. 7a gezeigten Ausschnitt einer Glaskeramik-Kochfläche in einer Draufsicht,

Fig. 8a in einer schematischen Darstellung in einer Ansicht von unten einen Ausschnitt einer Glaskeramik-Kochfläche mit einer genoppten Unterseite,

Fig. 8b in einer schematischen Darstellung in einer Ansicht von unten einen Ausschnitt einer Glaskeramik-Kochfläche mit einer nicht strukturierten Unterseite,

Fig. 9a in einer schematischen seitlichen Darstellung einen Ausschnitt einer genoppten Glaskeramik-Kochfläche,

Fig. 9b in einer schematischen seitlichen Darstellung einen Ausschnitt einer nicht strukturierten Glaskeramik-Kochfläche,

Fig. 10 in einer schematischen seitlichen Darstellung einen Ausschnitt einer Glaskeramik-Kochfläche mit einem Anzeigebereich und

Fig. 11 in einer schematischen seitlichen Darstellung einen Ausschnitt einer Kochmulde mit einer Glaskeramik-Kochfläche, einem Heizkörper und Sensorelektroden.

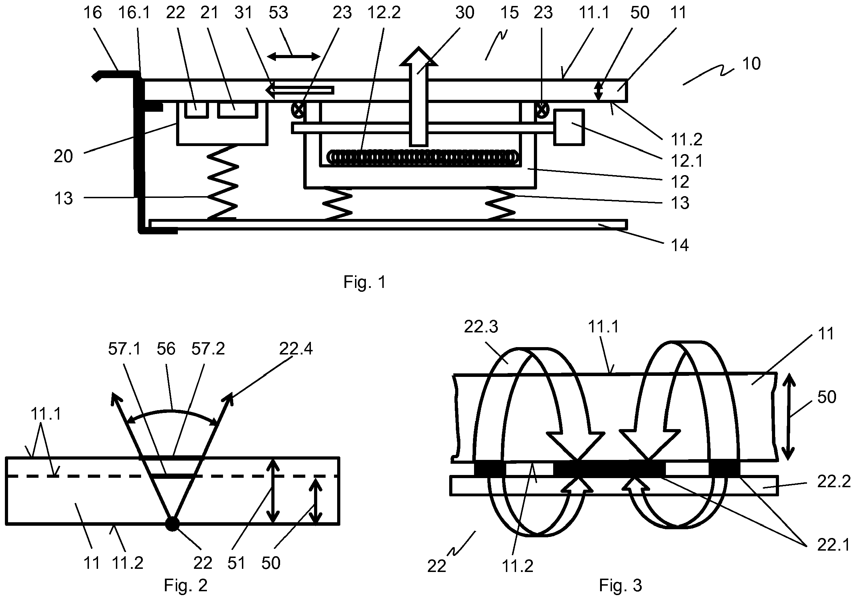

Fig. 1 zeigt in einer schematischen Darstellung einen Ausschnitt einer Kochmulde 10 mit einer Glaskeramik-Kochfläche 11, einem Heizkörper 12 und einer Elektronikanordnung 20.

Der Heizkörper 12, der im vorliegenden Ausführungsbeispiel als Strahlungsheizkörper ausgeführt ist, ist mittels Federelementen 13, welche sich an einem Kochmuldenboden 14 abstützen, gegen eine Unterseite 11.2 der Glaskeramik-Kochfläche 11 angedrückt. Der Heizkörper 12 weist eine Heizwendel 12.2 sowie einen Schutztemperaturbegrenzer 12.1 auf. Der Schutztemperaturbegrenzer 12.1 unterbricht die Stromzufuhr zu der Heizwendel 12.2, wenn die Temperatur der Glaskeramik-Kochfläche 11 einen vorgegebenen Schwellwert überschreitet. Der Heizkörper 12 definiert einen Heißbereich, der auf einer Oberseite 11.1 der Glaskeramik-Kochfläche 11 als Kochzone 15 markiert ist und auf den ein Kochgeschirr, beispielsweise ein Kochtopf, aufgestellt werden kann. Durch den Heizkörper 12 wird das Kochgeschirr und das darin aufbewahrte Kochgut aufgeheizt, wie dies durch einen dargestellten Energiefluss 30 symbolisiert ist. Der Energiefluss 30 setzt sich dabei vorwiegend aus von der Heizwendel 12.2 ausgesandter Strahlungsenergie sowie im Bereich der Glaskeramik-Kochfläche 11 durch Wärmeleitung übertragene Energie zusammen. Bei der Energieübertragung von dem Heizkörper 12 zu dem Kochgeschirr 30 treten Energieverluste auf, wie sie hier am Beispiel einer Wärmequerleitung 31 innerhalb der Glaskeramik-Kochfläche 11 gezeigt sind. Die Glaskeramik-Kochfläche 11 weist eine durch einen Doppelpfeil markierte, gegenüber bekannten Glaskeramik-Kochflächen reduzierte Dicke 50 auf. Sie ist mit einem flexiblen Klebstoff 16.1 in einen Rahmen 16 der Kochmulde 10 eingeklebt. Der Rahmen 16 ist mit dem Kochmuldenboden 14 verbunden.

Die Elektronikanordnung 20 ist mittels eines Federelements 13 an die Unterseite 11.2 der Glaskeramik-Kochfläche 11 angedrückt. Sie umfasst in dem gezeigten Ausführungsbeispiel eine Anzeige 21 und einen Berührungssensor 22. Die Anzeige 21 kann beispielsweise als Sieben-Segment-Anzeige oder als grafisches Display ausgeführt sein. Von dem Heizkörper 12 ist die Elektronikanordnung 20 um einen Abstand 53 beabstandet. Leuchtelemente 23 sind in dem dargestellten Ausführungsbeispiel als selbstleuchtende Kochzonenmarkierung am äußeren Rand des Heizkörpers 12 angeordnet.

Die erfindungsgemäße Glaskeramik-Kochfläche 11 weist eine folgende, in Gewichtsprozent angegebene Zusammensetzung auf:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $AS_2O_3$ | 0 - 1,5 |

(fortgesetzt)

| | |
|---|---|
| $TiO_2 + ZrO_2 + SnO_2$ | 3,8 - 6 |
| $V_2O_5$ | 0,01 - 0,08 |
| $Fe_2O_3$ | 0,03 - 0,3 |

Zusätzlich können weitere Farboxide bis zu einem Anteil von maximal 1,0 Gewichtsprozent enthalten sein. Dabei sind der $Li_2O$-Anteil vorzugsweise auf einen Bereich von 3,0 bis 4,2 Gewichtsprozent, der $TiO_2$-Gehalt vorzugsweise auf einen Bereich von 2,3 bis 4,0 Gewichtsprozent und der $Fe_2O_3$-Anteil auf 0,03 bis 0,2 Gewichtsprozent begrenzt.

Zur Herstellung der erfindungsgemäßen Glaskeramik-Kochfläche 11 wird zunächst ein Grünglas in der oben genannten Zusammensetzung geschmolzen, in die gewünschte Plattenform verformt und entsprechend zugeschnitten. Während eines nachfolgenden Keramisierungsprozesses wird ein vorkristallisiertes glaskeramisches Zwischenerzeugnis mit Hochquarzmischkristall (HQMK) als vorherrschender Kristallphase hergestellt. Durch einen weiteren Kristallumwandlungsschritt wird die HQMK-Phase teilweise in eine Keatitmischkristallphase umgewandelt. Dieser Umwandlungsschritt erfolgt bei einer Maximaltemperatur $T_{max}$, die über eine vorgegebene Haltezeit $t(T_{max})$ gehalten wird. Geeignete Haltezeiten und Maximaltemperaturen sind durch einen Temperatur-Zeit-Bereich vorgegeben, der von vier Geraden begrenzt wird. Die Geraden verbinden dabei Eckpunkte des Temperatur-Zeit-Bereichs mit den Wertepaaren ($T_{max}$ = 910°C; $t(T_{max})$ = 25 Minuten), ($T_{max}$ = 960°C; $t(T_{max})$ = 1 Minute), ($T_{max}$ = 980°C; $t(T_{max})$ = 1 Minute) und ($T_{max}$ = 965°C; $t(T_{max})$ = 25 Minuten).

Durch die Zusammensetzung und das beschriebene Herstellungsverfahren wird eine Glaskeramik-Kochfläche 11 mit einer zur Oberfläche der Glaskeramik-Kochfläche 11 hin ausgerichteten Gradientenschicht und einem darunterliegenden Kern erhalten. Im Kern liegt Keatitmischkristall (KMK) als vorherrschende Kristallphase vor. Die Gradientenschicht weist Hochquarzmischkristall (HQMK) als vorherrschende Kristallphase auf. Ausgehend von der Oberfläche der Glaskeramik-Kochfläche übersteigt der KMK-Kristallphasenanteil in eine Tiefe von 10 $\mu$m oder mehr 50% der Summe der HQMK- und KMK-Kristallphasenanteile. Über der Gradientenschicht ist vorzugsweise noch eine amorphe Schicht ausgebildet.

Die so hergestellte Glaskeramik-Kochfläche 11 weist in der genannten Zusammensetzung bei gleicher Materialstärke eine gegenüber bekannten Glaskeramik-Kochflächen 11 auf LAS-Basis erhöhte Festigkeit auf. Daher können, wie in Figur 2 angedeutet, Glaskeramik-Kochflächen 11 mit gegenüber einer üblichen Dicke 51 reduzierter Dicke 50 für Kochmulden 10 verwendet werden. Dabei werden weiterhin die in entsprechenden Normen (EN 60335, UL 858, CSA 22.2) vorgegebenen Festigkeitsanforderungen eingehalten. Die übliche Dicke 51 liegt dabei bei im privaten Hausgerätebereich eingesetzten Glaskeramik-Kochflächen 11 in einem Bereich von 3,8-4,2 mm. Demgegenüber kann die erfindungsgemäße Glaskeramik-Kochflächen 11 bis zu einer reduzierten Dicke 50 von größer oder gleich 2,8 mm eingesetzt werden, wobei weiterhin die genannten Normanforderungen bezüglich der Festigkeit der Glaskeramik-Kochflächen 11 eingehalten werden.

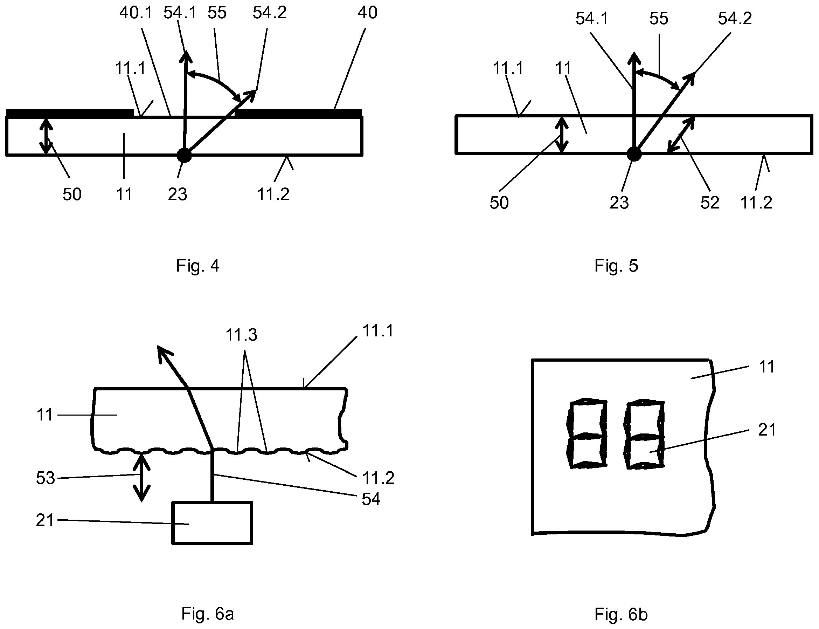

Eine solche reduzierte Dicke 50 der Glaskeramik-Kochfläche 11 führt zu wesentlichen Verbesserungen im Betrieb der Kochmulde 10. Wie zu den Figuren 2 und 3 näher erläutert, kann durch die reduzierte Dicke 50 das Ansprechverhalten von Berührungssensoren 22 deutlich verbessert werden. Wie zu den Figuren 4 und 5 dargelegt, wird durch die reduzierte Dicke 50 auch die Übertragung von Informationen mittels Anzeigen 21 oder Leuchtelementen 23, welche unter der Glaskeramik-Kochfläche 11 angeordnet sind, wesentlich verbessert. So kann beispielsweise die im Ausführungsbeispiel gemäß Figur 1 vorgesehene Kochzonenmarkierung mittels Leuchtelementen 23 aufgrund des bei reduzierter Dicke 50 der Glaskeramik-Kochfläche 11 reduzierten Parallaxenfehlers auch bei schrägem Blickwinkel genauer der tatsächlichen Position des Heizkörpers 12 zugeordnet werden.

Durch die reduzierte Dicke 50 kann weiterhin der Energiefluss 30 von dem Heizkörper 12 zu einem nicht dargestellten, aufgestellten Kochgeschirr verbessert werden. Die durch die Glaskeramik-Kochfläche 11 gebildete thermische Masse wird reduziert, was zu einer erhöhten Reaktionsgeschwindigkeit auf Leistungsänderungen des Heizkörpers 12 und damit einer verbesserten Regelbarkeit eines Kochprozesses führt. Ebenfalls gelangt ein größerer Anteil der von der Heizwendel 12.2 emittierten Wärmestrahlung zu dem aufgestellten Kochgeschirr.

Auch die Energieverluste der Kochmulde sind bei einer reduzierten Dicke 50 der Glaskeramik-Kochfläche 11 verringert. Bei gleicher spezifischer Wärmekapazität der Glaskeramik sinkt der darin im Bereich der Kochzone 15 gespeicherte Wärmeinhalt E entsprechend der Formel

$$\Delta E = \pi \cdot r^2 \cdot d \cdot \rho \cdot cp \cdot \Delta T$$

proportional zu der vorgesehenen Dickenreduzierung. In der Gleichung bedeuten r den Radius der Kochzone 15, d die jeweilige Dicke 50, 51 der Glaskeramik-Kochfläche 11, $\rho$ die Dichte (2,6g/cm3) und cp die spezifische Wärmekapazität (0,8 J/(g·J)) der Glaskeramik sowie $\Delta T$ eine durchgeführte Temperaturerhöhung im Bereich der Kochzone 15. Für einen Kochzonendurchmesser von 180 mm und eine Temperaturerhöhung von 500 K ergibt sich für eine 4 mm dicke Glaskeramik-Kochfläche 11 eine Änderung des Wärmeinhalts von 29,3 Wh, während sich der Wärmeinhalt für eine 3 mm dicke Glaskeramik-Kochfläche 11 lediglich um 22,1 Wh ändert. Es liegt somit eine Energieeinsparung von ca. 7,3 Wh entsprechend 25 % vor.

Die Wärmequerleitung 31 als Ursache von Energieverlusten verringert sich ebenfalls proportional zu der vorgenommenen Reduzierung der Glaskeramik-Dicke. Entsprechend der Gleichung

$$\Delta Q = (\lambda \cdot A \cdot t \cdot \Delta T)/l$$

ergibt sich für eine 25%ige Dickenänderung eine Änderung der durch Wärmequerleitung 31 verlorenen Energie $\Delta Q$ von ebenfalls 25 %. In der Gleichung bedeuten $\lambda$ die Wärmeleitfähigkeit (1,6W/(m·K)), A die Querschnittsfläche in Ausbreitungsrichtung des Energieflusses, t die Zeitdauer des Wärmetransports, $\Delta T$ den Temperaturunterschied zwischen dem Heißbereich und einem umgebenden Kaltbereich und I den Abstand zwischen dem Heißbereich und dem Kaltbereich.

Eine weitere Energieeinsparung ergibt sich dadurch, dass bei reduzierter Dicke 50 der Glaskeramik-Kochfläche 11 zwischen der Glaskeramik-Unterseite 11.2 und der Glaskeramik-Oberseite 11.1 ein geringerer Temperaturunterschied vorliegen muss, um eine bestimmte Energie pro Zeiteinheit durch Wärmeleitung durch die Glaskeramik-Kochfläche 11 zu transportieren. Die Temperatur der Glaskeramik-Unterseite kann somit bei einer dünneren Glaskeramik-Kochfläche 11 geringer gewählt werden als bei einer dickeren Glaskeramik-Kochfläche 11, was zu geringeren Energieverlusten zur Umgebung führt.

Die erfindungsgemäße Glaskeramik-Kochfläche 11 weist eine geeignete Einfärbung im sichtbaren Wellenlängenbereich bei zugleich niedriger Streuung (Haze) auf. Anzeigen 21 und Leuchtelemente 23 können so durch die Glaskeramik-Kochfläche 11 hindurch wahrgenommen bzw. abgelesen werden. Dabei treten keine oder nur geringe Streulichtverluste auf. Gleichzeitig verhindert die Einfärbung einen unerwünschten Einblick durch die Glaskeramik-Kochfläche 11 hindurch in die Kochmulde 10.

Fig. 2 zeigt in einer schematischen Darstellung einen Ausschnitt einer Glaskeramik-Kochfläche 11 mit einem optischen Berührungssensor 22.

Zur vereinfachten Darstellung ist von dem optischen Berührungssensor 22 lediglich die Sendediode an der Unterseite 11.2 der Glaskeramik-Kochfläche 11 dargestellt. Diese strahlt mit einem festen Öffnungswinkel 56 Infrarotstrahlung 22.4 durch die Glaskeramik-Kochfläche 11.

In der vereinfachten, nicht maßstabsgerechten Zeichnung ist die Glaskeramik-Kochfläche 11 zunächst in einer üblichen Dicke 51 von 4 mm gezeigt. Durch eine Strichlinie ist der Verlauf der Oberseite 11.1 der Glaskeramik-Kochfläche 11 bei einer reduzierten Dicke 50 der Glaskeramik-Kochfläche 11 von vorliegend 3,0 mm angedeutet. Die äußeren Strahlen der Infrarotstrahlung 22.4 begrenzen auf der jeweiligen Oberfläche 11.1 einer Glaskeramik-Kochfläche 11 in der üblichen Dicke 51 und der reduzierten Dicke 50 eine ausgeleuchtete Fläche 57.1, 57.2. Dabei ist die erste ausgeleuchtete Fläche 57.1 einer Glaskeramik-Kochfläche 11 mit reduzierter Dicke 50 und die zweite ausgeleuchtete Fläche 57.2 einer Glaskeramik-Kochfläche 11 mit üblicher Dicke 51 zugewiesen.

Wie die Darstellung in Figur 2 zeigt, verkleinert sich die ausgeleuchtete Fläche 57.1, 57.2 für dünneres Material proportional zum Verhältnis der jeweiligen Dicken 50, 51 zum Quadrat. Für eine Dickenänderung von 4 mm auf 3 mm ergibt sich somit ein Verhältnis von 9/16 = 0,5625 zwischen der ersten ausgeleuchtete Fläche 57.1 und der zweiten ausgeleuchteten Fläche 57.2. Bei einem festen Öffnungswinkel 56 der Sendediode wird demnach bei einer Glaskeramik-Kochfläche 11 mit einer reduzierten Dicke 50 eine kleinere Fläche 57.1 mit höherer Flächenintensität ausgeleuchtet. Dadurch kann die Auflösung zwischen benachbarten optischen Berührungssensoren 22 verbessert werden. Denkbar ist es weiterhin, die Sendeleistung der Sendediode bei Glaskeramik-Kochflächen 11 mit reduzierter Dicke 50 bei im Vergleich zu einer dickeren Glaskeramik-Kochfläche 11 gleichbleibender Empfindlichkeit des optischen Berührungssensors 22 zu verringern.

Fig. 3 zeigt in einer schematischen Darstellung einen Ausschnitt einer Glaskeramik-Kochfläche 11 mit einem kapazitiven Berührungssensor 22. Elektrode 22.1 des kapazitiven Berührungssensors 22 ist auf einer Platine 22.2 aufgebracht und gegen die Unterseite 11.2 der Glaskeramik-Kochfläche 11 gedrückt. Durch eine geeignete elektronische Ansteuerung der Elektrode 22.1 bildet sich ein elektrisches Feld 22.3 aus, welches die erfindungsgemäße Glaskeramik-Kochfläche 11 mit reduzierter Dicke 50 durchdringt. Darüber hinaus sind auch Ausgestaltungen von kapazitiven Berührsensoren mit mehr als einer Elektrode im Sinne der Erfindung einsetzbar.

Wird ein Finger oder ein elektrisch leitfähiges Berührutensil auf die Oberseite 11.1 der Glaskeramik-Kochfläche 11 im Bereich des elektrischen Feldes 22.3 gelegt, so ändert sich die Kapazität zwischen der Elektrode 22.1., vormals dem freien Raum, und dann dem Finger. Dies wird von dem kapazitiven Berührungssensor 22 ausgewertet und als Schaltsignal interpretiert.

Generell verändert sich die Empfindlichkeit für kapazitive Sensoren nach der Kondensatorformel

$$C = \varepsilon_0 \varepsilon_r * A/d$$

bei einer Änderung der Glaskeramik-Dicke d gemäß dem Verhältnis der Dickenänderung. Dabei bedeuten C die Kapazität des Kondensators, $\varepsilon_0$ die elektrische Feldkonstante, $\varepsilon_r$ die Dielektrizitätszahl und A die effektive Kondensatorfläche zwischen der Elektrode 22.1 und dem Finger. Bei einer Reduzierung der Dicke 50, 51 der Glaskeramik-Kochfläche 11 von 4 mm auf 3 mm steigt die Empfindlichkeit des kapazitiven Berührungssensors 22 um 4/3 = 1,25, also um 25 %. Dies kann für mehrere mögliche Vorteile genutzt werden. Zum einen kann die erhöhte Empfindlichkeit sowie das verbesserte Signal-/Rausch-Verhältnis zu einer Verbesserung der Zuverlässigkeit des kapazitiven Berührungssensors 22 verwendet werden. Weiterhin kann die verbesserte Empfindlichkeit für zwischen dem kapazitiven Berührungssensor 22 und der Unterseite 11.2 der Glaskeramik-Kochfläche 11 angeordnete, funktionale Zusatzschichten, wie beispielsweise eine Immersionsschicht oder einer Folie mit dicker, immersionswirksamer Klebeschicht, genutzt werden. Die Zusatzschicht und die Glaskeramik-Kochfläche 11 sind dabei vorzugsweise so aufeinander abgestimmt, dass die Gesamtempfindlichkeit des kapazitiven Berührungssensors 22 einer Anwendung unter einer Glaskeramik-Kochfläche 11 in der üblichen Dicke 51 ohne Zusatzschicht entspricht. Denkbar ist es auch, die Sensorfläche A des kapazitiven Berührungssensors 22, also insbesondere die Fläche der Elektroden 22.1, entsprechend der erreichten Steigerung der Empfindlichkeit zu reduzieren. Durch diese Maßnahme können feinere Sensorstrukturen erreicht werden.

Vorteilhaft ist bei der in Figur 3 gezeigten Anordnung die Unterseite 11.2 der Glaskeramik-Kochfläche 11 nicht strukturiert, insbesondere nicht genoppt, ausgeführt. Dadurch liegt die Elektrode 22.1 unmittelbar an der Unterseite 11.2 der Glaskeramik-Kochfläche 11 an. Noppentäler, in denen sich zwischen der Unterseite 11.2 der Glaskeramik-Kochfläche 11 und der Elektrode 22.1 Schmutz oder Feuchtigkeit ansammeln kann, sind so vermieden. Dadurch kann die Zuverlässigkeit des kapazitiven Berührungssensors 22 deutlich verbessert werden.

Fig. 4 zeigt in einer schematischen Darstellung einen Ausschnitt einer Glaskeramik-Kochfläche 11 mit einem Leuchtelement 23 und einer Oberseitenbeschichtung 40.

Bei der stark schematisierten und nicht maßstabsgerechten Zeichnung ist ein Leuchtelement 23 unmittelbar an der Unterseite 11.2 einer Glaskeramik-Kochfläche 11 angeordnet. Die Glaskeramik-Kochfläche 11 weist eine reduzierte Dicke 50 von im vorliegenden Ausführungsbeispiel 3,2 mm auf. Auf der Oberseite 11.1 der Glaskeramik-Kochfläche 11 ist die Oberseitenbeschichtung 40 aufgebracht. Bei der Oberseitenbeschichtung 40 kann es sich beispielsweise um eine keramische Farbe handeln, welche vor dem Keramisierungsprozess auf die Oberseite des Grünglases aufgebracht und während der Keramisierung eingebrannt wurde. Die Oberseitenbeschichtung 40 ist opak.

Gegenüberliegend zum Leuchtelement 23 weist die Oberseitenbeschichtung 40 eine Aussparung 40.1 auf, durch welche das Licht des Leuchtelements 23 aus der Glaskeramik-Kochfläche 11 austreten kann. Gezeigt sind ein zur Glaskeramik-Kochfläche 11 senkrecht verlaufender Lichtstrahl 54.1 und ein schräg dazu verlaufender Lichtstrahl 54.2. Der schräg verlaufende Lichtstrahl 54.2 ist, ausgehend von dem Leuchtelement 23, zum Rand der Aussparung 40.1 hin ausgerichtet. Zwischen dem senkrechten Lichtstrahl 54.1 und dem schräg verlaufenden Lichtstrahl 54.2 ist ein maximal möglicher Betrachtungswinkel 55 ausgebildet, unter dem ein von dem Leuchtelement 23 ausgehender Lichtstrahl noch durch die Aussparung 40.1 in der Oberseitenbeschichtung 40 austreten kann.

Wie der Darstellung in Figur 4 zunächst zu entnehmen ist, wird, bezogen auf die Aussparung 40.1, bei einer verringerten Dicke 50 der Glaskeramik-Kochfläche 11 die Parallaxe bei einem schrägen Blick auf ein unter der Glaskeramik-Kochfläche 11 angeordnetes Leuchtelement 23 oder eine Anzeige 21 gegenüber einer dickeren Glaskeramik-Kochfläche 11 verringert.

Wie der Darstellung weiter zu entnehmen ist, steigt bei gleicher oberseitiger Maskierung der maximale Betrachtungswinkel 55, unter dem ein gegenüberliegend zur Aussparung 40.1 angeordnetes Leuchtelement 23 oder eine Anzeige 21 noch gesehen werden kann. Bei einem Durchmesser (D) der Aussparung 40.1 und eine Dicke 50, 51 (d) der Glaskeramik-Kochfläche 11 ergibt sich der maximale Betrachtungswinkel 55 (α) für ein direkt an der Unterseite 11.2 der Glaskeramik-Kochfläche 11 angeordnetes Leuchtelement 23 oder eine Anzeige 21 aus der Gleichung

$$\alpha = \arctan(D/(2 \cdot d)).$$

Für eine Durchmesser D der Aussparung 40.1 von 2mm ergibt sich für eine 4mm dicke Glaskeramik-Kochfläche 11 ein maximaler Betrachtungswinkel 55 von 14°, während bei einer 3mm dicken Glaskeramik-Kochfläche 11 ein maximaler Betrachtungswinkel 55 von 18,4° möglich ist. Entsprechend ergibt sich für einen Durchmesser D der Aussparung 40.1 von 4mm und eine 4mm dicke Glaskeramik-Kochfläche 11 ein maximaler Betrachtungswinkel von 25,6° und für eine 3mm dicke Glaskeramik-Kochfläche 11 von 33,7°.

Fig. 5 zeigt in einer schematischen Darstellung einen Ausschnitt einer Glaskeramik-Kochfläche 11 mit einem Leuchtelement 23. Entsprechend Figur 4 ist das Leuchtelement 23 unmittelbar an die Unterseite 11.2 einer in ihrer Dicke 50 reduzierten Glaskeramik-Kochfläche 11 angeordnet. Für die nachfolgende Betrachtung wird von einer isotropen Strahlungsverteilung des Leuchtelements 23 ausgegangen. Dargestellt sind ein die Glaskeramik-Kochfläche 11 senkrecht durchlaufender Lichtstrahl 54.1 und ein dazu in einem Betrachtungswinkel 55 schräg verlaufender Lichtstrahl 54.2. Der Weg, den der senkrecht verlaufende Lichtstrahl 54.1 innerhalb der Glaskeramik-Kochfläche 11 läuft, entspricht deren vorliegend reduzierten Dicke 50. Der Weg, den der schräg verlaufende Lichtstrahl 54.2 innerhalb der Glaskeramik-Kochfläche 11 läuft, ist proportional zum Betrachtungswinkel 55 länger, wie es in der Darstellung durch einen Doppelpfeil 52 angedeutet ist. Durch den längeren Weg innerhalb der Glaskeramik-Kochfläche 11 ist die Intensität des schräg verlaufenden Lichtstrahls 54.2 nach Austritt aus der Glaskeramik-Kochfläche 11 gegenüber dem senkrecht verlaufenden Lichtstrahl 54.1 auf Grund erhöhter Absorptionsverluste reduziert. Der dargestellte Betrachtungswinkel 55 stellt den Winkel dar, bei dem die Intensität des schräg verlaufenden Lichtstrahls 54.2 50 % des senkrecht verlaufenden Lichtstrahls 54.1 entspricht, und zwar jeweils nach Austritt aus der Glaskeramik-Kochfläche 11.

Der spektrale Transmissionsgrad T berechnet sich als Verhältnis der Intensität der Strahlung nach und vor Durchtritt durch ein Medium. Nach dem Gesetz von Lambert-Beer kann der spektrale Transmissionsgrad T einer Glaskeramik-Kochfläche 11 der Dicke d1 wie folgt in einen spektrale Transmissionsgrad T einer Glaskeramik-Kochfläche 11 der Dicke d2 umgerechnet werden:

$$T_{i(d2)} = T_{i(d1)} \cdot e^{(\varepsilon \cdot c \cdot (d1 - d2))} \text{ oder}$$

oder

$$T_{i(d2)} = T_{i(d1)}^{d1/d2}$$

Darin bedeuten $\varepsilon$ den Extinktionskoeffizienten, c die Färbemittelkonzentration und $T_i$ die innere Transmission. Der spektrale Transmissionsgrad im Lambert-Beer Gesetz bezieht sich immer auf die innere Transmission $T_i$, also nur auf den transmittierenden Anteil des gesamten Lichtflusses. Reflektierende Anteile sind hierbei vom Gesamtlichtfluss bereits abgezogen.

Daraus lassen sich für verschiedene Wellenlängen und damit verschiedene Transmissionskoeffizienten der Glaskeramik und für verschiedene Dicken 50, 51 der Glaskeramik-Kochfläche 11 die Betrachtungswinkel 55, bei denen die Lichtintensität des schräg verlaufenden Lichtstrahls 54.2 50% des senkrecht verlaufenden Lichtstrahls 54.1 beträgt, berechnen. Bei einem Transmissionsgrad T von 0,25%, bezogen auf eine 4mm dicke Glaskeramik-Kochfläche 11 bei senkrechtem Lichtdurchtritt, ergibt sich ein Betrachtungswinkel 55 von 26,3°. Für das gleiche Glaskeramikmaterial und die gleiche Wellenlänge berechnet sich der Betrachtungswinkel 55 für eine 3mm dicke Glaskeramik-Kochfläche 11 zu 29,9°. Ausgehend von einem Transmissionsgrad T von 0,80% bei senkrechtem Lichtdurchtritt durch eine 4mm dicke Glaskeramik-Kochfläche 11 ergibt sich für diese ein Betrachtungswinkel 55 von 29,0°, während eine aus gleichem Glaskeramikmaterial hergestellte, 3mm dicke Glaskeramik-Kochfläche 11 einen Betrachtungswinkel 55 von 32,8° aufweist.

Durch die Verwendung einer Glaskeramik-Kochfläche 11 mit reduzierter Dicke 50 kann demnach der Betrachtungswinkel 55, mit dem beispielsweise eine Anzeige 21 noch mit ausreichender Helligkeit abgelesen werden kann, deutlich verbessert werden.

Ein weiterer Vorteil der reduzierten Dicke 50 der Glaskeramik-Kochfläche 11 ergibt sich bezüglich der Verfärbung von unter der Glaskeramik-Kochfläche 11 angeordneten Leuchtelementen 23 bzw. Anzeigen 21, insbesondere bei spektral breitbandigen Leuchtelementen bzw. Anzeigen, insbesondere bei weißem Licht. Als Maß für die Verfärbung gilt dabei das Verhältnis V der Transmission für zwei Wellenlängen w1 und w2 bei zwei Dicken 50, 51 d1, d2 der Glaskeramik-Kochfläche 11.

Ist die Einfärbung der Glaskeramik-Kochfläche 11 an eine reduzierte Dicke 50 angepasst, so bleibt das Produkt aus der Farbstoffkonzentration c, dem Extinktionskoeffizienten ε und der Dicke 50, 51 d und damit die Extinktion gemäß

$$E = \varepsilon \cdot c \cdot d$$

gleich.

Die Reduzierung der Dicke 50, 51 der Glaskeramik-Kochfläche 11 hat somit keinen Effekt auf die Verfärbung

Ist die Farbstoffkonzentration für die dünnere Glaskeramik-Kochfläche 11 gleich der für die dickere Glaskeramik-Kochfläche 11 gewählt, zeigt also die dünnere Glaskeramik-Kochfläche 11 eine geringere optische Dichte, so kann für die dünnere Glaskeramik-Kochfläche 11 eine im Vergleich zur dickeren Glaskeramik-Kochfläche 11 erzielbare Verbesserung der Verfärbung nachgewiesen werden:

$$V1 = \tau(w1,d1)/\tau(w2,d1)$$

$$V2 = \tau(w1,d2)/\tau(w2,d2)$$

Mit dem Lambert-Beerschen Gesetz lässt sich ableiten (mit dem Ansatz von $T = P \cdot T_i$ kürzt sich der Faktor P in der Betrachtung der T Verhältnisse heraus und man kann T anstelle von $T_i$ verwenden):

$$V1 = V2^{(d1/d2-1)} = V2^{(d1/d2-2)} \cdot V2 = K \cdot V2$$

$$K = V2^{(d1/d2-2)}$$

Beispielhaft für eine bekannte Glaskeramik-Kochfläche ergibt sich daraus:

$$w1=470nm, w2=630nm, d1=3mm, d2=4mm$$

$$V1=12{,}6\%, V2=6{,}3\%, K=1{,}99$$

Demnach verbessert sich die Verfärbung entsprechend dem Verhältnis V1=T(470nm)/T(620nm)= 6,3% bei einer 4mm dicken Glaskeramik-Kochfläche 11 auf V2= 12,6% bei einer 3mm dicken Glaskeramik-Kochfläche 11.

Durch die verringerte Verfärbung wird ein Weißabgleich für Leuchtelemente 23 und Anzeigen 21 vereinfacht. Unter der Glaskeramik-Kochfläche 11 angeordnete Leuchtelemente und Anzeigen sind bei einer reduzierten Dicke 50 der Glaskeramik-Kochfläche 11 nicht mehr so stark verfärbt.

Die verringerte Verfärbung wirkt sich insbesondere bei einem schrägen Blick auf das Leuchtelement 23 bzw. die Anzeige 21 aus. Warnmeldungen, die vorzugsweise durch unterschiedliche Farbgebungen des Leuchtelementes 23 bzw. der Anzeige 21 vorgenommen werden, können so besser erkannt werden.

Fig. 6a zeigt in einer schematischen seitlichen Darstellung einen Ausschnitt einer Glaskeramik-Kochfläche 11 mit einer genoppten Unterseite 11.2 und einer darunter in einem Abstand 53 angeordneten Anzeige 21. Die Anzeige 21 ist vorliegend als Sieben-Segment-Anzeige ausgeführt

Ein von der Anzeige 21 ausgesendeter der Lichtstrahl 54 durchdringt die Glaskeramik-Kochfläche 11. In die Unterseite 11.2 der Glaskeramik-Kochfläche 11 eingeformte Noppen 11.3 wirken wie kleine Linsen, sodass der Lichtstrahl 54 in Abhängigkeit von dem Ort, in dem er auf die Glaskeramik-Kochfläche 11 trifft, unterschiedlich gebrochen wird.

Fig. 6b zeigt den in Fig. 6a gezeigten Ausschnitt der Glaskeramik-Kochfläche 11 in einer Draufsicht. Durch die Wirkung der Noppen 11.3 ist die Anzeige 21 stark verzeichnet. Dieser Effekt wird mit steigendem Abstand der Anzeige 21 zu der Unterseite 11.2 der Glaskeramik-Kochfläche 11 noch verstärkt. Fein strukturierte Symbole können daher bei einer genoppten Unterseite der Glaskeramik-Kochfläche 11, wie sie für bekannte Glaskeramik-Kochflächen 11 erforderlich ist, nicht dargestellt werden und auch bei gröberen Symbolen kann ein fehlerfreies Ablesen erschwert sein.

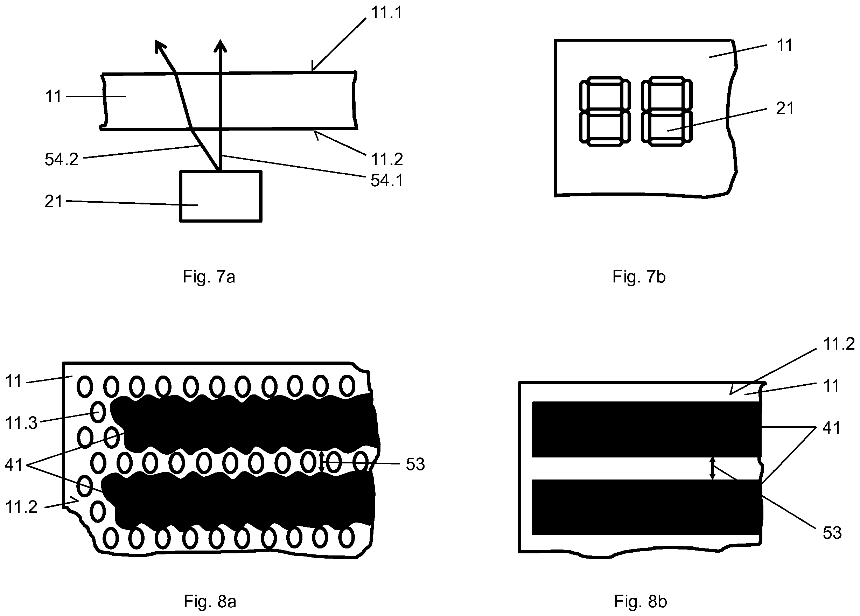

Fig. 7a zeigt in einer schematischen seitlichen Darstellung einen Ausschnitt einer Glaskeramik-Kochfläche 11 mit einer glatten Unterseite 11.3 und einer beabstandet angeordneten Anzeige 21. Entsprechend den Figuren 6a und 6b ist die Anzeige wieder als Sieben-Segment-Anzeige ausgeführt. Eine solche glatte, nicht strukturierte Unterseite 11.3 wird durch die beschriebene, erfindungsgemäße Glaskeramik-Kochfläche 11 auch bei einer reduzierten Dicke 50 möglich, wobei weiterhin die Anforderung insbesondere an die Stoßfestigkeit der Glaskeramik-Kochfläche 11 eingehalten werden.

Fig. 7b zeigt den in Fig. 7a gezeigten Ausschnitt der Glaskeramik-Kochfläche 11 in einer Draufsicht. Im Vergleich zu der Darstellung in Figur 6b erscheint die Anzeige 21 konturscharf und ohne Verzeichnungen. Bedingt durch die nicht strukturierte Unterseite 11.2 sowie den geringen Streulichtanteil (Haze) der erfindungsgemäßen Glaskeramik-Kochfläche 11 können somit auch fein strukturierte Symbole durch die Glaskeramik-Kochfläche 11 hindurch dargestellt und erkannt werden.

Fig. 8a zeigt in einer schematischen Darstellung in einer Ansicht von unten einen Ausschnitt einer Glaskeramik-Kochfläche 11 mit einer genoppten Unterseite 11.2. Die Noppen 11.3 sind dabei regelmäßig auf der Unterseite 11.2 angeordnet.

Auf der Unterseite 11.2 sind zwei Bahnen einer Beschichtung 41 in einem Abstand 53 zueinander aufgebracht. Die Bahnen stehen stellvertretend für eine Vielzahl möglicher Beschichtungen 41, welche mit unterschiedlicher Funktion auf der Unterseite 11.2 der Glaskeramik-Kochfläche 11 aufgebracht sein können. Beispielsweise kann die Beschichtung 41 als undurchsichtige Streulichtabdeckung vorgesehen sein. Solche Streulichtabdeckungen werden vorzugsweise außerhalb der Heißbereiche der Glaskeramik-Kochfläche 11 aufgebracht, um auch bei einem starken Auflicht einen Einblick durch die Glaskeramik-Kochfläche 11 hindurch in die Kochmulde 10 zu verhindern.

In einer anderen Anwendung kann eine transparente und farbige Beschichtung 41 im Bereich einer Anzeige 21 oder eines Leuchtelements 23 aufgebracht sein. Mit einer solchen farbigen Beschichtung 41 kann durch subtraktive Farbmischung die farbliche Darstellung der Anzeige 21 oder des Leuchtelements 23 durch die Glaskeramik-Kochfläche 11 hindurch angepasst werden.

Die Beschichtung 41 kann auch aus einem elektrisch leitfähigen Material bestehen. Dieses kann transparent, beispielsweise in Form einer ITO-Schicht, oder opak, beispielsweise als Gold-Beschichtung, ausgeführt sein. Mit einer solchen leitfähigen Beschichtung 41 können beispielsweise die in Figur 3 gezeigten Elektroden 22.1 eines kapazitiv wirkenden Berührungssensors 22 hergestellt sein. Sind diese Elektroden 22.1 transparent ausgeführt, so kann dahinter eine Anzeige 21 oder ein Leuchtelement 23 angeordnet werden. Mit einer solchen Anzeige 21 kann eine intuitive Benutzerführung ermöglicht werden. Dabei wird in Abhängigkeit von dem jeweils vorliegenden Anzeigeinhalt ein unterschiedlicher Schaltvorgang durch den Berührungssensor 22 ausgelöst.

Ebenfalls denkbar ist es, dass eine elektrisch leitfähige Beschichtung 41 in einen Heißbereich der Glaskeramik-Kochfläche 11 geführt ist. Die Beschichtung 41 kann dort als Flächenelement oder als Leiterbahn eines Sensors ausgeführt sein. Ein solcher Sensor ermöglicht beispielsweise die Bestimmung der Temperatur der Glaskeramik-Kochfläche 11 im Heißbereich. Dazu kann eine Widerstandsänderung entlang einer aus der elektrisch leitfähigen Beschichtung 41 hergestellten Leiterbahn gemessen und ausgewertet werden. Ebenfalls möglich ist es, den elektrischen Widerstand der Glaskeramik-Kochfläche 11 selbst zwischen zwei im Abstand 53 zueinander angeordneten Leiterbahnen zu messen und daraus die Glaskeramik-Temperatur zu bestimmen. Mit Hilfe einer solchen Temperaturmessung kann eine Vielzahl von Funktionen ermöglicht werden, beispielsweise die Begrenzung einer maximalen Temperatur der Glaskeramik-Kochfläche 11 oder eine Leistungsumverteilung zwischen den Heizkreisen eines Mehrkreis-Heizkörpers in Abhängigkeit von der Qualität des aufgestellten Kochgeschirrs. Ebenfalls kann ein solcher Sensor dazu ausgelegt sein, einen aufgestellten Topf oder dessen Größe zu erkennen. Dazu sind kapazitiv oder induktiv wirkende Verfahren bekannt.

Nachteilig wirkt sich für die genannten Anwendungen die mangelnde Konturenschärfe der Beschichtung 41 aus, wie sie in Abhängigkeit von dem gewählten Beschichtungsverfahren durch die Noppen 11.3 bedingt ist. Mögliche Beschichtungsverfahren sind dabei unter anderem Siebdruck, sprühen oder bedampfen. Durch die mangelnde Konturenschärfe können Abstände 53 benachbarter Beschichtungsbereiche nicht genau eingehalten werden. Symbole, welche als hinterleuchtete Aussparungen in Streulichtabdeckungen vorgesehen sind, können so nur in einem groben Detaillierungsgrad dargestellt werden. Elektrische Messungen zwischen benachbarten Sensor-Leiterbahnen können durch die variierenden Abstände 53 verfälscht werden. Ebenso kann die Fläche beispielsweise von Elektroden 22.1 oder von Sensor-Flächenelementen nicht genau eingehalten werden. Dies kann zu Störungen beispielsweise beim Betrieb von kapazitiv wirkenden Berührungssensoren oder von kapazitiv wirkenden Sensor-Flächenelementen zu Topferkennung führen.

Fig. 8b zeigt in einer schematischen Darstellung in einer Ansicht von unten einen Ausschnitt einer erfindungsgemäßen Glaskeramik-Kochfläche 11 mit einer nicht strukturierten Unterseite 11.2. Im Gegensatz zu der in Figur 8a gezeigten Beschichtung 41 einer genoppten Unterseite 11.3 weist die Beschichtung 41 der glatten Unterseite 11.3 eine hohe Konturenschärfe auf. Die zuvor beschriebenen Nachteile, welche sich aus einer mangelnden Konturenschärfe der Beschichtung 41 für die verschiedenen möglichen Anwendungen ergeben, können so wirksam vermieden werden.

Weiterhin vorteilhaft wirkt sich dabei die erhöhte Festigkeit der erfindungsgemäßen Glaskeramik-Kochfläche 11 aus. Beschichtungen der Unterseite 11.2 einer Glaskeramik-Kochfläche 11 wirken, abhängig von dem gewählten Beschichtungsmaterial und dem Beschichtungsprozess, häufig festigkeitsmindernd auf die Glaskeramik-Kochfläche 11. Diese Festigkeitseinbuße kann durch die erhöhte Festigkeit der erfindungsgemäßen Glaskeramik-Kochfläche 11 ausgeglichen werden. Dadurch können verschiedene Arten von Beschichtungen 41 erst ermöglicht werden, ohne die Festigkeit der Glaskeramik-Kochfläche 11 unzulässig zu verringern.

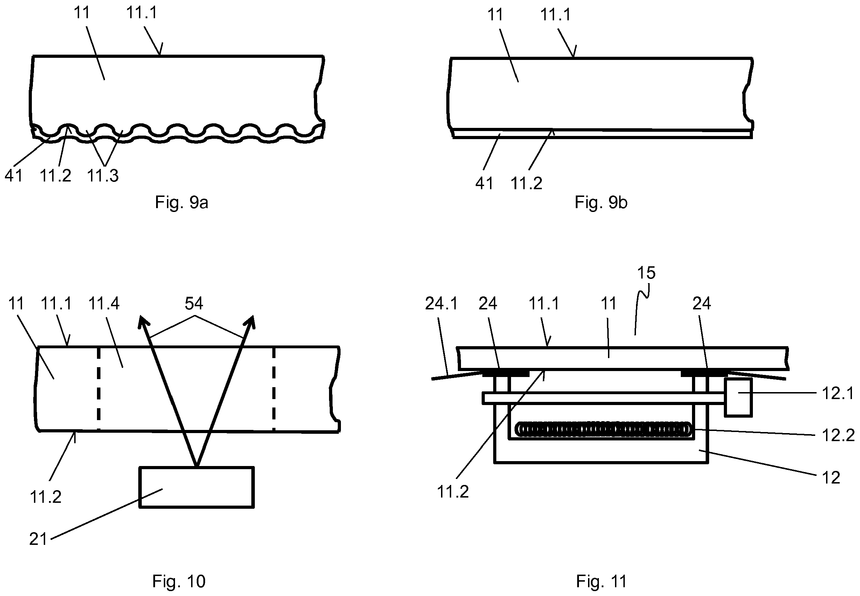

Fig. 9a zeigt in einer schematischen seitlichen Darstellung einen Ausschnitt einer genoppten Glaskeramik-Kochfläche 11 mit einer unterseitigen Beschichtung 41, wie sie bereits zu den Figuren 8a und 8b in ihrem möglichen Aufbau und Funktion beschrieben wurde.

Durch die Noppenstruktur bildet sich eine ungleichmäßige Schichtdicke der Beschichtung 41 aus.

Dabei ist die Schichtdicke insbesondere in den Noppentälern verstärkt und auf den Noppenbergen reduziert. Eine solche inhomogene Schichtdicke kann zu Beeinträchtigungen der zuvor beschriebenen Funktionen der Beschichtung 41 führen. So können beispielsweise bei gewünscht undurchsichtigen Streulichtabdeckungen auf den Noppenbergen durchscheinende Bereiche ausgebildet werden. Bei einer Hinterleuchtung der Glaskeramik-Kochfläche 11 erscheinen diese als unerwünschte Lichtpunkte. Ebenfalls können beispielsweise elektrische Widerstände von leitfähigen Beschichtungen 41 nicht mit ausreichender Genauigkeit hergestellt werden.

Fig. 9b zeigt in einer schematischen seitlichen Darstellung einen Ausschnitt einer nicht strukturierten Glaskeramik-Kochfläche 11 mit einer unterseitigen Beschichtung 41.

Durch die glatte Unterseite 11.2 der erfindungsgemäßen Glaskeramik-Kochfläche 11 ist die Schichtdicke der unterseitig aufgebrachten Beschichtung 41 sehr homogen und gleichbleibend. Die zu Figur 9b beschriebenen Nachteile einer Beschichtung 41 auf einer bekannten, unterseitig genoppten Glaskeramik-Kochfläche 11 können so vermieden werden.

Fig. 10 zeigt in einer schematischen seitlichen Darstellung einen Ausschnitt einer Glaskeramik-Kochfläche 11 mit einem Anzeigebereich 11.4.

Der durch Strichlinien abgegrenzte Anzeigebereich 11.4 weist gegenüber dem umgebenden Glaskeramikmaterial eine erhöhte Transmission auf. Dem Anzeigebereich 11.4 zugeordnet ist eine Anzeige 21 unter der Glaskeramik-Kochfläche 11 vorgesehen.

Durch die erhöhte Transmission der Glaskeramik-Kochfläche 11 im Anzeigebereich 11.4 wird nur ein geringer Anteil des von der Anzeige 21 ausgehenden Lichtstrahls 54 absorbiert. Gleichzeitig kann die Transmission im Anzeigebereich 11.4 über den Wellenlängenbereich des sichtbaren Lichtes derart ausgeführt sein, dass im Vergleich zum umgebenden Glaskeramikmaterial eine geringere Verfärbung des durchstrahlenden Lichtstrahls 54 erfolgt. Anzeigen 21 und Leuchtelemente 23 können so mit einer größeren Helligkeit sowie einer geringeren Verschiebung ihres Farbortes (insbesondere bei spektral breitbandigen Leuchtelementen bzw. Anzeigen, insbesondere bei weißem Licht) innerhalb des Anzeigebereichs 11.4 der Glaskeramik-Kochfläche 11 dargestellt werden. Weiterhin verbessert sich der Betrachtungswinkel der Anzeige durch die Aufhellung, wie oben schon erläutert wurde.

Zur Herstellung eines solchen Anzeigebereichs 11.4 enthält die Glaskeramik-Kochfläche 11 geeignete färbende Metallionen. Solche Metallionen bewirken zunächst eine gewünschte Volumenfärbung der Glaskeramik-Kochfläche 11. Durch eine partielle Aufwärmung der Glaskeramik-Kochfläche 11, beispielsweise mittels eines Lasers, und eine nachfolgend schnelle Abkühlung kann die Volumenfärbung zumindest teilweise wieder zurückgenommen werden. Auf diese Weise lassen sich innerhalb der Glaskeramik-Kochfläche 11 Anzeigebereiche 11.4 mit einer verbesserten Lichttransmission herstellen.

Fig. 11 zeigt in einer schematischen seitlichen Darstellung einen Ausschnitt einer Kochmulde 10 mit einer Glaskeramik-Kochfläche 11, einem Heizkörper 12 und Sensorelektroden 24. Die Sensorelektroden 24 sind als flächige Metallelektroden zwischen dem Rand des Heizkörpers 12 und der Unterseite 11.2 der Glaskeramik-Kochfläche 11 angeordnet. Sie sind über entsprechende Anschlussleitung 24.1 mit einer geeigneten Auswerteelektronik verbunden.

Die Sensorelektroden 24 ermöglichen, zusammen mit der zugehörigen Auswerteelektronik, eine kapazitive Erkennung eines im Bereich der Kochzone 15 aufgestellten, nicht dargestellten Kochgeschirrs.

Durch die erfindungsgemäß glatte Unterseite der Glaskeramik-Kochfläche 11 können die Sensorelektroden 24 flächig an die Unterseite 11.2 der Glaskeramik-Kochfläche 11 angedrückt werden. Spalte, wie sie sich zwangsläufig bei einer strukturierten Unterseite 11.2 zwischen den Sensorelektroden 24 und der Glaskeramik-Kochfläche 11, beispielsweise im Bereich von Noppentälern, ergeben, können vermieden werden. Dadurch wird verhindert, dass sich Schmutz oder insbesondere Feuchtigkeit zwischen den Sensorelektroden 24 und der Unterseite 11.2 der Glaskeramik-Kochfläche 11 ansammelt und die Funktion des Sensors stört. Durch die reduzierte Dicke 50 der erfindungsgemäßen Glaskeramik-Kochfläche 11 wird der Abstand zwischen den Sensorelektroden 24 und einem aufgestellten Kochgeschirr reduziert. Dadurch steigt entsprechend der zuvor beschriebenen Kondensatorformel die Empfindlichkeit des kapazitiven Sensors. Durch die glatte Unterseite 11.2 und die reduzierte Dicke 50 der erfindungsgemäßen Glaskeramik-Kochfläche 11 kann so die Empfindlichkeit und die Zuverlässigkeit des beschriebenen Systems zur Topf- und Topfgrößenerkennung deutlich verbessert werden.

Zusammenfassend lässt sich sagen, dass durch die erfindungsgemäße Kochmulde mit der erfindungsgemäßen Glaskeramik-Kochfläche 11 die Schnittstelle zwischen der Kochmulde 10 und einem Benutzer deutlich verbessert werden kann. Die Schnittstelle ist dabei durch jeweilige, unter der Glaskeramik-Kochfläche 11 angeordnete Berührungssensoren 22 und vorzugsweise durch zugeordnete Leuchtelemente 23 und/oder Anzeigen 21 gebildet. Der Schnittstelle können weiterhin zusätzliche Sensoren zugeordnet werden, welche einen vereinfachten Betrieb der Kochmulde ermöglichen.

Die Eigenschaften der erfindungsgemäßen Glaskeramik-Kochfläche 11 können für eine Reihe weiterer Anwendungen vorteilhaft verwendet werden. So ist es mögliche, durch eine geeignete unterseitige Beschichtung Widerstandsbahnen direkt oder getrennt durch eine isolierende Zwischenschicht auf die Glaskeramik-Unterseite 11.2 aufzubringen. Durch zufuhr elektrischer Energie können die Widerstandsbahnen aufgeheizt und somit als Heizkörper 12 verwendet werden. Durch die nicht strukturierte Unterseite der Glaskeramik-Kochfläche 11 können die Widerstandsbahnen und ggf. die Isolationsschichten mit einer deutlich verbesserten Konturenschärfe und Dickentoleranz aufgetragen werden. Der elektrische Widerstand der Widerstandsbahnen und damit die elektrische Leistung des derart gebildeten Heizkörpers 12 können dadurch deutlich reproduzierbarer hergestellt werden.

Durch die reduzierte Dicke 50 der erfindungsgemäßen Glaskeramik-Kochfläche 11 kann auch der Abstand zwischen der Induktionsspule eines als Heizkörper 12 verwendeten Induktionsheizkörpers und einem aufgestellten Kochgeschirr verringert werden. Dadurch wird eine verbesserte Ankopplung des Kochgeschirrs an das magnetische Wechselfeld des Induktionsheizkörpers erreicht, wodurch sich eine verbesserte Energieübertragung mit verminderten Energieverlusten ergibt.

Die Glaskeramik-Kochfläche 11 kann weiterhin durch Bohrungen durchbrochen sein, wobei beispielsweise Knebel oder Gasheizkörper durch die Bohrungen geführt sind.

In abweichenden Anwendungen kann eine der erfindungsgemäßen Glaskeramik-Kochfläche 11 entsprechende Glaskeramik-Platte auch als Strahlerabdeckung eines Strahlers, beispielsweise eines Baustrahlers, oder als Bügeleisensohle oder als Trennelement zwischen einer Heizeinrichtung und einem Nutzraum in einem Toaster oder als Backschale oder als Heizungsabdeckung einer Backofenbeheizung ausgebildet sein.

Ebenfalls denkbar ist es, einen Gasbrennerdeckel eines Gasbrenners von einem Gasherd, vorzugsweise von einem Gasherd mit einer Glaskeramik-Kochfläche 11, aus der erfindungsgemäßen Glaskeramik vorzusehen.

Auch bei diesen genannten Anwendungen führt die Glaskeramik mit ihrer erhöhten Festigkeit und damit ermöglichten, reduzierten Dicke 50 zu deutlichen Verbesserungen des Energietransfers, der Energieverluste sowie der Bedien- und Regelbarkeit der jeweiligen Geräte.

Bezugszeichenliste

| | |
|---|---|
| 10 | Kochmulde |
| 11 | Glaskeramik-Kochfläche |
| 11.1 | Oberseite |
| 11.2 | Unterseite |
| 11.3 | Noppen |
| 11.4 | Anzeigebereich |
| 12 | Heizkörper |
| 12.1 | Schutztemperaturbegrenzer |
| 12.2 | Heizwendel |
| 13 | Federelement |
| 14 | Kochmuldenboden |
| 15 | Kochzone |
| 16 | Rahmen |
| 16.1 | Klebstoff |

| | |
|---|---|
| 20 | Elektronikanordnung |
| 21 | Anzeige |
| 22 | Berührungssensor |
| 22.1 | Elektroden |
| 22.2 | Platine |
| 22.3 | Elektrisches Feld |
| 22.4 | Infrarotstrahlung |
| 23 | Leuchtelement |
| 24 | Sensor-Elektrode |
| 24.1 | Anschlussleitung |
| 30 | Energiefluss |
| 31 | Wärmequerleitung |
| 40 | Oberseitenbeschichtung |
| 41 | Beschichtung |
| 50 | reduzierte Dicke |
| 51 | übliche Dicke |
| 52 | Doppelpfeil |
| 53 | Abstand |
| 54 | Lichtstrahl |
| 54.1 | senkrechter Lichtstrahl |
| 54.2 | schräg verlaufender Lichtstrahl |
| 55 | Betrachtungswinkel |
| 56 | Öffnungswinkel |
| 57.1 | erste ausgeleuchtete Fläche |
| 57.2 | zweite ausgeleuchtete Fläche |

**Patentansprüche**

1. Kochmulde (10) mit einer Glaskeramik-Kochfläche (11) und zumindest einem unter der Glaskeramik-Kochfläche (11) angeordneten Heizkörper (12), **dadurch gekennzeichnet, dass** zumindest ein durch die Glaskeramik-Kochfläche (11) hindurch ansteuerbarer Berührungssensor (22) zur Leistungseinstellung des zumindest einen Heizkörpers (12) mittelbar oder unmittelbar mit der Glaskeramik-Kochfläche (11) verbunden oder an diese angedrückt oder beabstandet zu dieser angeordnet ist, dass die Glaskeramik-Kochfläche (11) als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |

(fortgesetzt)

| Sb₂O₃ | 0 - 1,5 |
|---|---|
| AS₂O₃ | 0 - 1,5 |
| TiO₂ + ZrO₂ + SnO₂ | 3,8 - 6 |
| V₂O₅ | 0,01 - 0,08 |
| Fe₂O₃ | 0,03 - 0,3 |

und gegebenenfalls weitere Farboxide, in Summe bis maximal 1,0 Gewichtsprozent, wobei die Glaskeramik-Kochfläche (11) einen Kern und im Kern Keatitmischkristall (KMK) als vorherrschende Kristallphase aufweist, wobei der KMK-Kristallphasenanteil in einer Tiefe von 10 μm oder mehr 50% der Summe von HQMK-und KMK-Kristallphasenanteilen übersteigt und wobei die Glaskeramik-Platte eine Dicke (50, 51) in einem Bereich zwischen 2,8mm und 3,5mm, bevorzugt zwischen 2,8mm und 3,2mm, aufweist.

2. Kochmulde (10) nach Anspruch 1, **dadurch gekennzeichnet, dass** die Glaskeramik-Kochfläche (11) an ihrer Oberfläche oder zu ihrer Oberfläche hin gerichtet eine Gradientenschicht und den Kern darunter liegend aufweist, wobei die Glaskeramik-Kochfläche (11) im Kern Keatitmischkristall (KMK) als vorherrschende Kristallphase und in der Gradientenschicht Hochquarzmischkristall (HQMK) als vorherrschende Kristallphase aufweist.

3. Kochmulde (10) nach Anspruch 1 oder 2, **dadurch gekennzeichnet, dass** der maximale Haze bei einer Wellenlänge von 630nm höchstens 6%, vorzugsweise höchstens 5%, besonders bevorzugt höchstens 4% beträgt.

4. Kochmulde (10) nach Anspruch 1, 2 oder 3, **dadurch gekennzeichnet, dass** der zumindest eine Berührungssensor (22) als kapazitiver Sensor oder als optischer Sensor, letzterer insbesondere als Infrarot-Sensor, ausgebildet ist.

5. Kochmulde (10) nach einem der Ansprüche 1 bis 4, **dadurch gekennzeichnet, dass** zumindest ein Leuchtelement (23) und/oder zumindest eine selbst leuchtende oder fremd beleuchtete Anzeige (21) mittelbar oder unmittelbar anliegend an der Unterseite (11.2) der Glaskeramik-Kochfläche (11) oder beabstandet zu der Unterseite (11.2) der Glaskeramik-Kochfläche (11) angeordnet ist und dass das Leuchtelement (23) und/oder die Anzeige (21) die Glaskeramik-Kochfläche (11) durchleuchtet.

6. Kochmulde (10) einem der Ansprüche 1 bis 5, **dadurch gekennzeichnet, dass** die Unterseite (11.2) der Glaskeramik-Kochfläche (11) nicht strukturiert ausgeführt ist.

7. Kochmulde (10) nach einem der Ansprüche 1 bis 6, **dadurch gekennzeichnet, dass** zwischen dem Berührungssensor (22) und/oder dem Leuchtelement (23) und/oder der zumindest einen Anzeige (21) auf der einen Seite und der Glaskeramik-Kochfläche (11) auf der anderen Seite eine transparente und/oder eine farbig transparente und/oder eine nicht transparente und/oder eine lichtstreuende Zwischenschicht mittelbar oder unmittelbar angeordnet ist.

8. Kochmulde (10) nach einem der Ansprüche 1 bis 7, **dadurch gekennzeichnet, dass** die Glaskeramik-Kochfläche (11) auf ihrer Unterseite (11.2) zumindest bereichsweise mit einer im sichtbaren Spektralbereich nicht transparenten Streulichtabdeckung versehen ist.

9. Kochmulde (10) nach einem der Ansprüche 1 bis 8, **dadurch gekennzeichnet, dass** Sensor-Flächenelemente und/oder Sensor-Leiterbahnen und/oder Sensor-Kontaktstellen mittelbar oder unmittelbar auf die Glaskeramik-Kochfläche (11) aufgebracht sind und/oder dass Sensor-Elektroden (24) mittelbar oder unmittelbar auf die Glaskeramik-Kochfläche (11) aufgebracht oder an diese angedrückt sind.

10. Kochmulde (10) nach einem der Ansprüche 1 bis 9, **dadurch gekennzeichnet, dass**, jeweils normiert auf eine 4mm dicke Glaskeramik-Kochfläche (11), der "Haze" bei einer Wellenlänge von 470nm höchstens 15%, vorzugsweise höchstens 12% beträgt und/oder dass der maximale Streulichtanteil in einem Wellenlängenbereich von 400nm bis 500nm höchstens 20%, vorzugsweise höchstens 17%, beträgt.

11. Kochmulde (10) nach einem der Ansprüche 1 bis 10, **dadurch gekennzeichnet, dass**, jeweils normiert auf eine 4mm dicke Glaskeramik-Kochfläche (11), der Lichttransmissionsgrad im Wellenlängenbereich von 380nm bis 780nm kleiner oder gleich 5%, bevorzugt 10 % ist.

12. Kochmulde (10) nach einem der Ansprüche 1 bis 11, **dadurch gekennzeichnet, dass** der spektrale Transmissionsgrad bei einer Wellenlänge von 420nm größer als 0,2% ist.

13. Kochmulde (10) nach einem der Ansprüche 1 bis 12, **dadurch gekennzeichnet, dass** die Glaskeramik-Kochfläche (11) färbende Metallionen enthält, wobei der spektrale Transmissionsgrad der Glaskeramik-Kochfläche (11) in einem Anzeigebereich (11.4) durch eine Behandlung mittels elektromagnetischer Strahlung induzierte lokale Aufheizung bereichsweise gegenüber einem benachbarten Bereich erhöht ist.

14. Kochmulde (10) nach Anspruch 13, **dadurch gekennzeichnet, dass** in einem Wellenlängenbereich von 380nm bis 780nm und in dem Anzeigebereich (11.4) der Lichttransmissionsgrad der Glaskeramik-Kochfläche (11) kleiner oder gleich 2,5% ist oder dass der Lichttransmissionsgrad zwischen 2,5% und 5% liegt oder dass der Lichttransmissionsgrad kleiner oder gleich 10% ist.

15. Kochmulde (10) nach Anspruch 10 oder 14, **dadurch gekennzeichnet, dass** die Anzeige 21 oder das Leuchtelement 23 innerhalb des Anzeigebereichs (11.4) der Glaskeramik-Kochfläche (11) mit einem vergrößerten spektralen Transmissionsgrad und/oder einem vergrößerten Lichttransmissionsgrad gegenüber dem umgebenden Glaskeramik-Material angeordnet ist.

**Claims**

1. A cooktop (10) comprising a glass ceramic cooking plate (11) and at least one heater (12) arranged below the glass ceramic cooking plate (11); **characterized in that** at least one touch sensor (22) which is operable across the glass ceramic cooking plate (11) for adjusting the power of the at least one heater (12) is indirectly or directly connected to or urged against the glass ceramic cooking plate (11) or arranged with a spacing thereto; wherein the glass ceramic cooking plate (11) is made of a lithium aluminosilicate glass ceramic (LAS glass ceramic) having the following constituents in the following composition (in percent by weight):

| | |
|---|---|
| $Al_2O_3$ | 18 - 23 |
| $Li_2O$ | 2.5 - 4.2 |
| $SiO_2$ | 60 - 69 |
| $ZnO$ | 0 - 2 |
| $Na_2O + K_2O$ | 0.2 - 1.5 |
| $MgO$ | 0 - 1.5 |
| $CaO + SrO + BaO$ | 0 - 4 |
| $B_2O_3$ | 0 - 2 |
| $TiO_2$ | 2.3 - 4.5 |
| $ZrO_2$ | 0.5 - 2 |
| $P_2O_5$ | 0 - 3 |
| $SnO_2$ | 0 - <0.6 |
| $Sb_2O_3$ | 0 - 1.5 |
| $As_2O_3$ | 0 - 1.5 |
| $TiO_2 + ZrO_2 + SnO_2$ | 3.8 - 6 |
| $V_2O_5$ | 0.01 - 0.08 |
| $Fe_2O_3$ | 0.03 - 0.3, |

and optionally further coloring oxides, in total up to a maximum amount of 1.0 wt%; wherein the glass ceramic cooking plate (11) has a core and includes keatite solid solution (K s.s.) as a predominant crystal phase in the core, wherein in a depth of 10 $\mu$m or more the K s.s. crystal phase fraction exceeds 50 % of the total of the HQ s.s. and K s.s. crystal phase contents; and wherein the glass ceramic cooking plate has a thickness (50, 51) ranging between 2.8 mm and 3.5 mm, preferably between 2.8 mm and 3.2 mm.

2. The cooktop (10) according to claim 1, **characterized in that** the glass ceramic cooking plate (11) has a gradient layer at the surface or towards the surface thereof and the core is located below said gradient layer, wherein the glass ceramic cooking plate (11) includes keatite solid solution (K s.s.) as the predominant crystal phase in the core and high-quartz solid solution (HQ s.s.) as the predominant crystal phase in the gradient layer.

3. The cooktop (10) according to claim 1 or 2, **characterized in that** at a wavelength of 630 nm, maximum haze is not more than 6 %, preferably not more than 5 %, most preferably not more than 4 %.

4. The cooktop (10) according to claim 1, 2, or 3, **characterized in that** the at least one touch sensor (22) is a capacitive sensor or an optical sensor, in the latter case in particular an infrared sensor.

5. The cooktop (10) according to any one of claims 1 to 4, **characterized in that** at least one light-emitting element (23) and/or at least one self-luminous or externally illuminated display (21) is arranged indirectly or directly adjacent to the lower surface (11.2) of the glass ceramic cooking plate (11) or spaced from the lower surface (11.2) of the glass ceramic cooking plate (11), and that the light-emitting element (23) and/or the display (21) shines through the glass ceramic cooking plate (11).

6. The cooktop (10) according to any one of claims 1 to 5, **characterized in that** the lower surface (11.2) of the glass ceramic cooking plate (11) is not textured.

7. The cooktop (10) according to any one of claims 1 to 6, **characterized in that** a transparent and/or a colored transparent and/or a non-transparent and/or a light-diffusing intermediate layer is disposed indirectly or directly between the touch sensor (22) and/or the light-emitting element (23) and/or the at least one display (21) on the one side and the glass ceramic cooking plate (11) on the other side.

8. The cooktop (10) according to any one of claims 1 to 7, **characterized in that** the lower surface (11.2) of the glass ceramic cooking plate (11) is provided, at least in sections thereof, with a diffusion light barrier which is not transparent in the visible spectral range.

9. The cooktop (10) according to any one of claims 1 to 8, **characterized in that** sensor area elements and/or sensor conductor tracks and/or sensor contact points are applied indirectly or directly on the glass ceramic cooking plate (11), and/or that sensor electrodes (24) are indirectly or directly applied on or urged against the glass ceramic cooking plate (11).

10. The cooktop (10) according to any one of claims 1 to 9, **characterized in that** at a wavelength of 470 nm, haze is not more than 15 %, preferably not more than 12 %, and/or that in a range of wavelengths from 400 nm to 500 nm the maximum fraction of diffused light is not more than 20 %, preferably not more than 17 %, normalized to a glass ceramic cooking plate (11) of 4 mm thickness in each case.

11. The cooktop (10) according to any one of claims 1 to 10, **characterized in that** in a range of wavelengths from 380 nm to 780 nm, light transmittance is less than or equal to 5 %, preferably 10 %, normalized to a glass ceramic cooking plate (11) of 4 mm thickness in each case.

12. The cooktop (10) according to any one of claims 1 to 11, **characterized in that** at a wavelength of 420 nm, spectral transmittance is greater than 0.2 %.

13. The cooktop (10) according to any one of claims 1 to 12, **characterized in that** the glass ceramic cooking plate (11) includes color-imparting metal ions, wherein in a display region (11.4) spectral transmittance of the glass ceramic cooking plate (11) is increased in some areas as compared to an adjacent region, due to local heating induced by a treatment with electromagnetic radiation.

14. The cooktop (10) according to claim 13, **characterized in that** in a range of wavelengths from 380 nm to 780 nm and in the display region (11.4), the glass ceramic cooking plate (11) exhibits a light transmittance of less than or equal to 2.5 %, or a light transmittance between 2.5 % and 5 %, or a light transmittance of less than or equal to 10 %.

15. The cooktop (10) according to any one of claims 10 or 14, **characterized in that** the display (21) or the light-emitting element (23) is arranged within the display region (11.4) of the glass ceramic cooking plate (11) which exhibits increased spectral transmittance and/or increased light transmittance compared to the surrounding glass ceramic material.

## Revendications

1. Foyer de cuisson (10) pourvu d'une surface de cuisson en vitrocéramique (11) et d'au moins un corps chauffant (12) disposé sous la surface de cuisson en vitrocéramique (11), **caractérisé en ce qu'**au moins un capteur tactile (22) pouvant être commandé à travers la surface de cuisson en vitrocéramique (11) est lié directement ou indirectement à la surface de cuisson en vitrocéramique (11) pour le réglage de la puissance d'au moins un corps chauffant (12) ou est pressé contre celle-ci ou placé à distance de celle-ci, **en ce que** la surface de cuisson en vitrocéramique (11) est formée en tant que vitrocéramique lithium - aluminosilicate (vitrocéramique LAS) avec les composants suivants en la composition suivante (en pourcentage en poids) :

| | |
|---|---|
| $AL_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - < 0,6 |
| $Sb_2O_3$ | 0 - 1,5 |
| $As_2O_3$ | 0 - 1,5 |
| $TiO_2 + ZrO_2 + SnO_2$ | 3,8 - 6 |
| $V_2O_5$ | 0,01 - 0,08 |
| $Fe_2O_3$ | 0,03 - 0,3 |

et le cas échéant d'autres oxydes teintés, au total jusqu'à au maximum 1,0 % en poids, la surface de cuisson en vitrocéramique (11) présentant un noyau et un cristal mixte de kéatite (KMK) dans le noyau comme phase cristalline prédominante, la proportion de phase cristalline KMK dépassant 50 % du total des proportions de phases cristallines HQMK et KMK à une profondeur de 10 $\mu$m ou plus et la plaque en vitrocéramique présentant une épaisseur (50, 51) comprise dans une plage entre 2,8 mm et 3,5 mm, de préférence entre 2,8 mm et 3,2 mm.

2. Foyer de cuisson (10) selon la revendication 1, **caractérisé en ce que** la surface de cuisson en vitrocéramique (11) présente une couche à gradients et le noyau situé en dessous, à sa surface ou en direction de sa surface, la surface de cuisson en vitrocéramique (11) présentant dans le noyau un cristal mixte de kéatite (KMK) comme phase cristalline prédominante et dans la couche à gradients un cristal mixte hautement quartzique (HQMK) comme phase cristalline prédominante.

3. Foyer de cuisson (10) selon la revendication 1 ou 2, **caractérisé en ce que** la brillance maximale à une longueur d'ondes de 630 nm atteint au maximum 6 %, de préférence au maximum 5 %, de manière particulièrement préférée au maximum 4 %.

4. Foyer de cuisson (10) selon la revendication 1, 2 ou 3, **caractérisé en ce que** le au moins un capteur tactile (22) est conçu sous la forme d'un capteur capacitif ou capteur optique, ce dernier se présentant en particulier sous la forme d'un capteur infrarouge.

5. Foyer de cuisson (10) selon l'une des revendications 1 à 4, **caractérisé en ce qu'**au moins un élément luminescent (23) et/ou au moins un affichage (21) auto-luminescent ou exo-luminescent est disposé directement ou indirectement en position adjacente à la face inférieure (11.2) de la surface de cuisson en vitrocéramique (11) ou à distance de la face inférieure (11.2) de la surface de cuisson en vitrocéramique (11) et **en ce que** l'élément luminescent (23) et/ou l'affichage (21) luit à travers la surface de cuisson en vitrocéramique (11).

6. Foyer de cuisson (10) selon l'une des revendications 1 à 5, **caractérisé en ce que** la face inférieure (11.2) de la surface de cuisson en vitrocéramique (11) est exécutée sous une forme non structurée.

7. Foyer de cuisson (10) selon l'une des revendications 1 à 6, **caractérisé en ce qu'**une couche intermédiaire transparente et/ou teintée transparente et/ou non transparente et/ou dispersant la lumière est disposée directement ou indirectement entre le capteur tactile (22) et/ou l'élément luminescent (23) et/ou le au moins un affichage (21) sur une face et la surface de cuisson en vitrocéramique (11) sur l'autre face.

8. Foyer de cuisson (10) selon l'une des revendications 1 à 7, **caractérisé en ce que** la surface de cuisson en vitrocéramique (11) est dotée sur sa face inférieure (11.2), au moins par zone, d'une couverture pour la lumière diffusée non transparente dans le domaine spectral visible.

9. Foyer de cuisson (10) selon l'une des revendications 1 à 8, **caractérisé en ce que** les éléments plats de capteur et/ou les pistes conductrices de capteur et/ou les points de contact de capteur sont déposés directement ou indirectement sur la surface de cuisson en vitrocéramique (11) et/ou **en ce que** les électrodes de capteur (24) sont déposées directement ou indirectement sur la surface de cuisson en vitrocéramique (11) ou pressées contre celle-ci.

10. Foyer de cuisson (10) selon l'une des revendications 1 à 9, **caractérisé en ce que** la « brillance », respectivement standardisée pour une surface de cuisson en vitrocéramique (11) de 4 mm d'épaisseur, atteint au maximum 15 %, de préférence au maximum 12 %, à une longueur d'onde de 470 nm, et/ou **en ce que** la proportion de lumière diffusée maximale dans une plage de longueurs d'ondes de 400 nm à 500 nm atteint au maximum 20 %, de préférence au maximum 17 %.

11. Foyer de cuisson (10) selon l'une des revendications 1 à 10, **caractérisé en ce que** le degré de transmission de la lumière, respectivement standardisé pour une surface de cuisson en vitrocéramique (11) de 4 mm d'épaisseur, est inférieur ou égal à 5 %, de préférence 10 %, dans une plage de longueurs d'ondes de 380 nm à 780 nm.

12. Foyer de cuisson (10) selon l'une des revendications 1 à 11, **caractérisé en ce que** le degré de transmission spectrale à une longueur d'ondes de 420 nm est supérieur à 0,2 %.

13. Foyer de cuisson (10) selon l'une des revendications 1 à 12, **caractérisé en ce que** la surface de cuisson en vitrocéramique (11) contient des ions métalliques teintant, le degré de transmission spectrale de la surface de cuisson en vitrocéramique (11) étant élevé dans une zone d'affichage (11.4) par un traitement au moyen de rayonnement électromagnétique de chauffage local induit par zones par rapport à une zone voisine.

14. Foyer de cuisson (10) selon la revendication 13, **caractérisé en ce que** le degré de transmission de la lumière de la surface de cuisson en vitrocéramique (11) est inférieur ou égal à 2,5 % dans une plage de longueurs d'ondes de 380 nm à 780 nm et dans la zone d'affichage (11.4) ou **en ce que** le degré de transmission de la lumière est compris entre 2,5 % et 5 % ou **en ce que** le degré de transmission de la lumière est inférieur ou égal à 10 %.

15. Foyer de cuisson (10) selon la revendication 10 ou 14, **caractérisé en ce que** l'affichage 21 ou l'élément luminescent 23 est disposé à l'intérieur de la zone d'affichage (11.4) de la surface de cuisson en vitrocéramique (11) avec un degré de transmission spectral augmenté et/ou u degré de transmission de la lumière augmenté par rapport au matériau en vitrocéramique environnant.

EP 3 196 555 B1

Fig. 1

Fig. 2

Fig. 3

Fig. 4

Fig. 5

Fig. 6a

Fig. 6b

11

21

Fig. 7b

11.1

11.2
54.1

11

54.2

21

Fig. 7a

11.2
11

41

53

Fig. 8b

53

11

11.3

41

11.2

Fig. 8a

Fig. 9b

Fig. 9a

Fig. 11

Fig. 10

**IN DER BESCHREIBUNG AUFGEFÜHRTE DOKUMENTE**

**In der Beschreibung aufgeführte Patentdokumente**

- DE 102006059850 A1
- DE 102011050867 A1

**In der Beschreibung aufgeführte Nicht-Patentliteratur**

- Low Thermal Expansion Glass Ceramics